(19) Europäisches Patentamt
European Patent Office
Office européen des brevets

(11) Veröffentlichungsnummer: **0 208 856 B1**

(12) # EUROPÄISCHE PATENTSCHRIFT

(45) Veröffentlichungstag der Patentschrift: **19.02.92**

(21) Anmeldenummer: **86106290.9**

(22) Anmeldetag: **07.05.86**

Teilanmeldung 90125321.1 eingereicht am 07/05/86.

(51) Int. Cl.$^5$: **C09J 167/00**, C08F 283/01, C08G 63/42, C08G 63/66, C08G 63/68, C08G 18/81, C08G 18/42, C09J 133/00

(54) **Haftklebstoffe auf der Basis von strahlenhärtbaren, (meth-)acrylgruppenhaltigen Polyestern.**

(30) Priorität: **07.05.85 DE 3516351**
**18.04.86 DE 3613082**

(43) Veröffentlichungstag der Anmeldung:
**21.01.87 Patentblatt 87/04**

(45) Bekanntmachung des Hinweises auf die Patenterteilung:
**19.02.92 Patentblatt 92/08**

(84) Benannte Vertragsstaaten:
**AT BE CH DE FR GB IT LI LU NL SE**

(56) Entgegenhaltungen:
**FR-A- 2 121 191**
**FR-A- 2 361 450**
**US-A- 3 664 861**
**US-A- 3 673 140**
**US-A- 4 451 627**

(73) Patentinhaber: **HÜLS AKTIENGESELLSCHAFT**
**Paul-Baumann-Strasse 1**
**W-4370 Marl 1(DE)**

(72) Erfinder: **Müller, Hartmut, Dr.**
**Siebengebirgsallee 19**
**W-5210 Troisdorf(DE)**
Erfinder: **Huber, Hans, Dr.**
**Im Korresgarten 68**
**W-5204 Lohmar(DE)**

**EP 0 208 856 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Haftklebstoffe auf der Basis von strahlenhärtbaren, (meth-)acrylgruppenhaltigen Polyestern

Als Haftklebstoffe geeignete Materialien oder Zubereitungen besitzen permanente Klebrigkeit, gutes Auffließverhalten auf unterschiedlichen Oberflächen sowie ein ausgewogenes Maß von Adhäsion und Cohäsion. Typischerweise werden mit Haftklebstoffen bevorzugt flächige Substrate beschichtet, so daß der Endverbraucher die Bequemlichkeit eines selbstklebenden Produktes als Klebeband, Selbstklebeetikett o. dgl. genießt. Zur Herstellung von solchen selbstklebenden Produkten muß die Haftklebstoffzubereitung in flüssiger Form aus das jeweilige Substrat aufgebracht und danach durch geeignete Maßnahmen verfestigt werden. Die einfachste und älteste Methode hierfür ist die Lösung des Klebstoffs in organischen Lösungsmitteln. Größere Lösungsmittelmengen erfordern aber entweder eine Verbrennung der Lösungsmitteldämpfe bei der Trocknung oder den Betrieb einer Rückgewinnungsanlage. Diese Kosten und Nachteile werden bei Einsatz von wässrigen Klebstoff-Dispersionen zwar vermieden, jedoch erfordert die Trocknung von wässrigen Zubereitungen hohen Energieeinsatz und erlaubt nur niedrige Geschwindigkeiten der Fertigung.

Haftklebstoffe, die in geschmolzenem Zustand aufgebracht werden müssen, sind z.B. Produkte auf Basis von Blockcopolymerisaten von Styrol oder Isopren bzw. Butadien, wie sie erstmals in der US-PS 3,229,478 beschrieben sind. Schmelzklebstoffe dieser Art erfodern jedoch hohe Temperaturen über z.B. 150° C, um bei der Beschichtung in erforderlicher Weise fließfähig zu sein. Hierzu kommt eine geringe Beständigkeit des Materials gegen Luftsauerstoff, Hitze, Licht sowie gegen Lösungsmittel. Eine anspruchsvolle Anwendung im "Hochleistungsbereich" ist somit nicht möglich.

Es hat nicht an Versuchen gefehlt, durch chemische Reaktion aus flüssigen Polymer-Gemischen einen Haftklebstoff herzustellen. Die Verwendung von Polyestern als Basismaterial für Haftklebestoffe in einem Reaktivsystem beschreibt die DE-PS 32 20 865, wonach durch Reaktion von Hydroxylpolyestern mit Alkoxysilyl-funktionellen Verbindungen vernetzbare Polymere entstehen, die aber noch bei 100° C zu langsam härten.
Allen diesen Reaktivsystemen sind zahlreiche Schwierigkeiten gemeinsam:
schwierige exakte Dosierung der funktionalisierenden Verbindungen, deren nicht ausreichende Reaktionsgeschwindigkeit und besonders mangelnde Reproduzierbarkeit der Eigenschaften des Haftklebstoffes.
Schwierigkeiten bereiten bei allen Reaktivsystemen die Erzielung der Ausgewogenheit von Adhäsionskraft und Cohäsionskraft des Klebstoffes. Vielfach kommt es zu Nachreaktionen bei Lagerung des selbstklebenden Produktes, die zu großen Änderungen der Eigenschaften und sogar zum Verlust der Klebrigkeit führen können.

Nun gibt es auf den anderen Gebieten der Druckfarben bzw. Schutz-Beschichtungen durch energiereiche Strahlen, d.h. ultraviolettes Licht oder Elektronenstrahlung (EB) induzierte Härtung von (meth-)acrylgruppenhaltigen Polyestern nach DE-OS 28 38 691 bzw. DE-OS 34 21 826 und die direkte strahleninduzierte Polymerisation von monomeren Gemischen nach US-PS 3,772,063 sowie die härtbare Lösung von Polymeren oder Praepolymeren in Monomergemischen nach US-PS 4,133,731. Nachteile bei der Verarbeitung sind hohe Gehalte an noch ungebundenen Estern der (Meth)acrylsäure, wodurch entflammbare Dämpfe auftreten, die Schleimhaut reizen, toxisch und stark riechend sind.
Selbst nach Polymerisation oder Vernetzung ist im Klebstoff noch ein unzulässig hoher Gehalt von Restmonomeren festzustellen.
Strahlenhärtbare Schmelzkleber nach US-PS 4,052,527 und 4,438,177 können nur bei hohen Temperaturen verarbeitet werden, erfordern hohe Strahlungsdosen für die Härtung mit der Folge der Schädigung des Substrats und ergeben zu geringe Variierbarkeit der Eigenschaften des Klebstoff.
Weiter sind strahlenhärtbare Überzüge, Lacke oder Schmelz klebstoffe, welche nicht die Eigenschaft dauerklebriger Haftklebstoffe besitzen nach FR-A 2 361 450, FR-A 2 121 191, US-A 3 664 861 und US-A 4 451 627 herstellbar, wobei ein Acrylat, ein Isocyanat bzw. ein Umsetzungsprodukt daraus mit einem niedermolekularen Polyester mit hoher Hydroxylzahl eingesetzt wird, oder ein Acrylat und ein Isocyanat mit einem Alkydharz nach US-A 3 673 140 zur Reaktion gebracht wird und in einer Drucktinte Verwendung findet.

Es bestand daher die Aufgabe, Haftklebstoffe mit folgendem Eigenschaftsbild zu entwickeln:
- frei von Lösungsmitteln und anderen flüchtigen Bestandteilen
- frei von ungesättigten Monomeren, geruchsarm und nicht toxisch
- möglichst gering gefärbt, vorzugsweise wasserklar
- Anwendung bei niedrigen Temperaturen von höchstens 50 bis 120° C
- Aushärtung mit geringer Strahlungsenergie von z.B. 2 bis 5 Mrad
- hohe Produktionsgeschwindigkeit bei der Beschichtung, auch bei hohem Klebstoffauftrag

- Abdeckung eines breiten Eigenschaftsbereiches der Haftklebstoffe, einschließlich des Hochleistungsbereiches mit hoher Festigkeit und geringer Alterung durch Licht, Sauerstoff oder Hitze.

Diese Aufgabe wird durch die Erfindung gelöst.

Gegenstand der Erfindung sind Haftklebstoffe auf der Basis von Acrylgruppen oder Methacrylgruppen tragenden Polyestern, dadurch gekennzeichnet, daß

a) Hydroxylgruppen enthaltende Basispolyester mit mittleren Molekulargewichten von 1.000 bis 10.000 und bei 20 °C flüssigem Zustand aus der Gruppe

$a_1$) Hydroxylpolyester mit verzweigter aus Polyestereinheiten bestehender Kette mit Verzweigungen an dritten und höheren polyesterbildenden Funktionen und/oder

$a_2$) Hydroxylpolyester mit über Estergruppen oder Etherbrücken von dritten oder höheren polyesterbildenden Funktionen gebundenen Alkylseitenketten mit 4 bis 36 C-Atomen in der Alkylgruppe,

worin 10 bis 90 % der Hydroxylgruppen der Polyester nach a) mit Acrylatverbindungen oder Methacrylatverbindungen umgesetzt sind, wobei

b) Acrylverbindungen oder Methacrylverbindungen aus der Gruppe

$b_1$) Isocyanatoalkyl(meth-)acrylat und/oder

$b_2$) Addukten aus Di- oder Triisocyanaten oder Polyisocyanaten oder Isocyanatopraepolymeren von Polyestern oder Polyethern mit niedrigem Molekulargewicht mit Hydroxylalkylacrylaten bzw.Hydroxyalkylmethacrylaten und/oder

$b_3$) Methyl-acrylamidoglykolat-methylether und/oder

$b_4$) nach Umsetzung von 10 bis 90 % der Hydroxylgruppen der Polyester mit einer Dicarbonsäure, Tricarbonsäure oder deren Anhydriden zu Carboxylgruppen mit Glycidylacrylat oder Glycidylmethacrylat und/oder

$b_5$) mit Methacrylsäure oder Acrylsäure verwendet sind, und

c) die so hergestellten Methacrylgruppen oder Acrylgruppen tragenden Polyester in dünner Schicht auf flächige Materialien aufgetragen und mittels Elektronenstrahlen oder UV-Strahlen, ggf. nach Zusatz eines Photoinitiators, vernetzt oder gehärtet werden unter Entstehen von dauerklebrigen Oberflächen.

Weiterer Gegenstand der Erfindung ist ein Verfahren zur Herstellung von Haftklebstoffen aus strahlenvernetzbaren Makromeren auf der Basis von Acrylatgruppen oder Methacrylatgruppen tragenden Polyestern nach Anspruch 1 oder einem der Ansprüche 2 bis 10, dadurch gekennzeichnet, daß in erster Stufe ein Hydroxylgruppen enthaltender Basispolyester mit mittlerem Molekulargewicht von 1.000 bis 10.000 und bei 20 °C flüssigem Zustand durch

$a_1$) Herstellung eines Hydroxylpolyesters mit verzweigter aus Polyestereinheiten bestehender Kette mit Verzweigungen an dritten und höheren polyesterbildenden Funktionen durch Kondensation von Diolen und Dicarbonsäuren bzw. deren polyesterbildenden Derivaten oder Anhydriden und mindestens 1 Mol-%, bezogen auf die Summe von Diolen und Dicarbonsäuren, einer trifunktionellen, polyesterbildenden Verbindung aus der Gruppe Triole, Tricarbonsäuren oder deren Derivate oder Anhydride oder Hydroxycarbonsäuren bei Temperaturen von 140 bis 230 °C in an sich bekannter Weise mit einem molaren Überschuß von Diolen plus Triolen gegenüber den Di- plus Tricarbonsäuren und Entfernung des überschüssigen Diols bei der Polykondensation, bis die OH-Zahl von 10 bis 100 und eine Säurezahl unter 1 erreicht ist,

oder

$a_2$)Herstellung eines Hydroxylpolyesters mit über Estergruppen oder Etherbrücken von dritten oder höheren polyesterbildenden Funktionen gebundenen Alkylseitenketten mit 4 bis 36 C-Atomen in der Alkylgruppe durch Kondensation von Diolen und Dicarbonsäuren bzw. der polyesterbildenden Derivate oder Anhydride und Tricarbonsäuremonoalkylestern, Trimethylolpropan-monocarbonsäureestern und/oder Glycidylestern von gesättigten Monocarbonsäuren mit 4 bis 36 C-Atomen im Alkylrest bzw. der Monocarbonsäuren bei Temperaturen von 140 bis 230 °C mit einem molaren Überschuß von Diolen plus ggf. Glycidylestern gegenüber Dicarbonsäure bzw. deren Derivaten bzw. Anhydriden plus Tricarbonsäuremonoestern und Entfernung des überschüssigen Diols bei der Polykondensation, bis die OH-Zahl von 10 bis 100 und eine Säurezahl unter 1 erreicht ist

und in zweiter Stufe Umsetzung von 10 bis 90 % der Hydroxylgruppen der Polyester mit Acrylverbindungen oder Methacrylverbindungen aus der Gruppe

$b_1$) Isocyanatoalkyl(meth-)acrylat und/oder

$b_2$) Addukten aus dissocyanaten oder Polyisocyanaten oder Isocyanatopraepolymeren von Polyestern oder Polyethern mit niedrigem Molekulargewicht mit Hydroxylalkylacrylaten bzw. Hydroxyalkylmethacrylaten und/oder

$b_3$) Methyl-acrylamidoglycolat-methylether und/oder

$b_4$) nach Umsetzung von 10 bis 90 % der Hydroxylgruppen der Polyester mit Dicarbonsäure, Tricarbonsäure oder deren Anhydriden mit den so gebildeten Carboxylgruppen Glycidylacrylat unter Bildung von Carboxylgruppen mit Glycidylacrylat

$b_5$) und/oder mit Methacrylsäure oder Acrylsäure

durch Umsetzung mit 1,0 bis 1,1 Mol eines der Stoffe $a_1$ bis $a_4$ je Mol der umzusetzenden OH-Gruppen bei 60 bis 150° C und Drucken von 3.400 mbar bis Normaldruck unter Ausschluß von Feuchtigkeit, worauf

c) der Haftkleber in dünner Schicht aufgetragen und mit Elektronenstrahlen oder UV-Strahlen vernetzt wird.

Die zur Herstellung der strahlenvernetzbaren Makromeren verwendeten Basispolyester sind Hydroxylpolyester mit Hydroxylzahlen von 10 bis 90, vorzugsweise 20 bis 60 mg KOH/g. Weiter sind diese Hydroxylpolyester bei Raumtemperatur flüssig, vorzugsweise bei 0° C flüssig, und besitzen mittlere Molekulargewichte zwischen 1.000 und 10.000, sowie eine Glasumwandlungstemperatur (Tg) unter 0° C, vorzugsweise unter -20° C und dementsprechend einen amorphen Zustand.

Die Haftkleber haben die Besonderheit und den großen Vorteil, bei Temperaturen von 50 bis 100° C in dünner Schicht auftragbar zu sein, ohne daß Lösungsmittel oder Verdünnungsmittel anwesend sind.

Zwei verschiedene Basispolyester, nämlich $a_1$ und $a_2$, sind verwendbar.

$A_1$ ist ein an sich bekannter, verzweigtkettiger Polyester, d.h. ein Polyester mit Hauptketten und Zweigketten aus Diolen bzw. Triolen und Dicarbonsäure bzw. Tricarbonsäure gebildet sind, wobei die Verzweigung den Kette stets an der dritten oder höheren polyesterbildenden Funktion, d.h. an der dritten OH-Gruppe von Triolen oder an der dritten Carboxylgruppe von Tricarbonsäuren auftritt.

Zur Herstellung von Hydroxypolyestern mit verzweigter Kette und bei 20°C flüssigem Zustand sind alle bekannten polyesterbildenden Ausgangsstoffe verwendbar, d.h. Diole und Triole, ggf. Tetraole, Dicarbonsäuren, Tricarbonsäuren der aliphatischen Reihe, der aromatischen Reihe und der cycloaliphatischen Reihe, wobei nur soviel aromatische Dicarbonsäuren und Tricarbonsäuren, d.h. im allgemeinen bis zu 20 % aller Di- oder Tricarbonsäuren, enthalten sein sollen, daß der flüssige Zustand der Polyester erreichbar ist. Als polyesterbildende Bestandteile mit dritter und höherer polyesterbildenden Funktion, d.h. als Triole oder Tricarbonsäuren, sind 1 bis 30 Mol-% verwendbar und 1 bis 10 Mol-% ausreichend, d.h. Triole oder Tricarbonsäuren oder deren Derivate, bezogen auf die Gesamtmenge von Diolen und Triolen und Dicarbonsäuren und Tricarbonsäuren bzw. deren Derivate.

$A_2$ ist ein neuer Hydroxylpolyester von neuartiger Kamm-Struktur, bei dem aus der wenig verzweigten Polyesterkette Alkylseitenketten an die Polyesterbestandteile mit mehr als zwei funktionellen Gruppen gebunden sind.

Die Polyester sind im Falle von $A_2$ solche von Glasumwandlungspunkten von kleiner 10° C, vorzugsweise kleiner -20°C, und im Falle von $A_1$ werden Hydroxylpolyester dieser niedrigen Glaspunkte ausgewählt, besonders dadurch, daß nicht ausschließlich aromatische Dicarbonsäuren bzw. mehrere aromatische Dicarbonsäuren zusammen mit aliphatischen Dicarbonsäuren Verwendung finden.

Der neue Polyester $A_2$ mit Alkylseitenketten ist ein bei Raumtemperatur flüssiger Hydroxylpolyester mit OH-Zahlen von 10 bis 100 aus zwei- und mehrfunktionellen Ausgangsstoffen, gekennzeichnet durch über Ester- und/oder Etherbindungen von tri- oder mehrfunktionellen Carbonsäuren und/oder Triolen oder mehrfunktionellen Polyolen und/oder Hydroxydicarbonsäuren entlang der Hauptkette der Polyester gebundene geradkettige oder verzweigte Alkylseitenketten von 4 bis 36 C-Atomen, wobei das Molverhältnis von Estersegmenten der Hauptkette zu Alkylseitenketten 1,0 zu 0,02 bis 2,0 beträgt, mit Glasumwandlungspunkten kleiner als 0° C, vorzugsweise kleiner als -20° C.

Als Estersegment der Polyester wird dabei die sich wiederholende Gruppierung

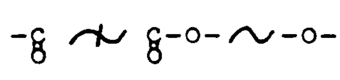

aus Di- oder Tricarbonsäure und ⌁ als deren Kohlenwasserstoffrest und einem Di- oder Triol mit ~ als deren Kohlenwasserstoffrest verstanden, wobei die Alkylseitenkette über eine dritte Carboxylgruppe der Tricarbonsäure oder eine dritte Hydroxylgruppe des Triols gebunden ist.

Die neuen Polyester $A_2$ sind unvernetzt und weitgehend linear, d.h. aus unverzweigten Hauptketten mit nur vergleichsweise geringer, durch trifunktionelle Glieder der Hauptkette bedingter Kettenverzweigung, aufgebaut, obgleich Tricarbonsäuren bzw. höhere Polycarbonsäuren und ggf. Triole bzw. höher funktionelle Polyole notwendig in dem Maße mitzuverwenden sind, wie Alkylseitenketten über Ester- und/oder Etherbindungen an die Hauptkette der Polyester zu binden sind.

Demgemäß weisen die neuen Polyester ganz oder überwiegend eine Art Kammstruktur - in vereinfacht gesehener ebener Projektion - auf bzw. eine Struktur, in der die Alkylseitenketten in möglichst regelmäßiger, statistischer Anordnung aus der im wesentlichen linearen und unverzweigten Hauptkette der Polyester herausragen.

In den Polyestern $A_2$ stammen die Alkylseitenketten aus Monocarbonsäureresten oder aus Monoalkanolresten, die an dritte Funktionen, d.h. Carboxylgruppen oder Etherbrücken von Tricarbonsäuren oder ggf. Tetracarbonsäuren, oder von Triolen oder ggf. Tetraolen in den Estersegmenten gebunden sind. Die Alkylseitenketten sind im wesentlichen gleichmäßig entlang der Hauptkette der Polyester gebunden, d.h. die Estersegmente der Hauptkette aus D- bzw. Polycarbonsäuren, Di- bzw. Polyolen und Dihydroxy-mono- bzw. Hydroxydicarbonsäuren besitzen zumindest teilweise Carboxyl- oder Ethergruppen mit daran gebundenen Alkylresten der Monocarbonsäure bzw. Monoalkohole.

Est ist erfindungsgemäß erforderlich, daß im wesentlichen eine Funktionalität der polyesterbildenden Bestandteile von lediglich 2 oder wenig mehr in der Polyesterhauptkette vorliegt, d.h. daß lediglich 2 Carboxylgruppen der Polycarbonsäuren bzw. lediglich 2 Hydroxylgruppen der Polyole oder lediglich durchschnittlich 2 polyesterbildende Hydroxyl- bzw. Carbonxylgruppen einer Hydroxylpolycarbonsäure in der Hauptkette der Polyester gebunden sind, obgleich als Ausgangsstoffe Tricarbonsäuren bzw. höhere Polycarbonsäuren und Triole bzw. höhere Polyole zusätzlich zu Dicarbonsäuren und Diolen verwendet werden. Die dritte Carboxylgruppe der Tricarbonsäuren und 3 OH-Gruppe der Triole trägt durch Wahl der Ausgangsstoffe und Herstellbedingungen die genannten Alkylseitenkette.

Es ist daher erfindungsgemäß vorgesehen, vorzugsweise Alkylester von mindestens trifunktionellen Carbonsäuren, ins besondere Monoester von Tricarbonsäuren und Diester von Tetracarbonsäuren, jedoch auch Dialkylester von Tricarbonsäuren und ggf. Trialkylester von tetrafunktionellen Carbonsäuren bzw. aliphatische Monoester von Triolen und Diester von Tetraolen, jedoch auch Diester aliphatischer Carbonsäuren von Triolen und Triester aliphatischer Carbonsäuren von Tetraolen als Ausgangsstoffe neben den üblichen Dicarbonsäuren und Diolen bzw. Hydroxycarbonsäuren zu verwenden. Bevorzugt sind Glycidylester von Monocarbonsäuren und Mono- bis Trialkylester von Tricarbonsäuren, wobei bei der Polyesterbildung eine Alkylestergruppe der Monocarbonsäure im Polyester erhalten bleibt, während weitere Alkylestergruppen in üblicher Weise abgespalten werden.

Weiter bevorzugt sind Trimethylolpropanester von Monocarbonsäuren.

Erfindungsgemäß ist es jedoch in vielen Fällen auch möglich, anstelle von besonders Monoestern von Polycarbonsäuren bzw. Monocarbonsäureestern von Polyolen von den Einzelkomponenten Tri- und höhere Polycarbonsäuren plus Monoalkohol bzw. Triol oder höhere Polyole plus Monocarbonsäure auszugehen, selbst Kombinationen von Polycarbonsäure und Monocarbonsäure bzw. Polyol und Monoalkanol sind möglich. Diese Verfahrensweise ist nicht bevorzugt.

In den Polyestern $A_2$ ist es sehr bevorzugt, zum Aufbau der Alkylseitenketten verzweigte Alkohole in Form ihrer Ester oder als Einzelkomponente oder verzweigte Monocarbonsäuren als deren Ester oder als Einzelkomponente einzusetzen.

Als Ausgangsstoffe können bekannte aliphatische Di-, Tri und höhere Polycarbonsäuren, aromatische Di-, Tri- und Polycarbonsäuren, Dihydroxy-monocarbonsäuren und Hydroxydicarbonsäuren sowie Mono- und Dialkylester der genannten Di- und höher funktionellen Carbonsäuren, Mono-, bzw. Dicarbonsäureester von Diolen und höheren Polyolen bzw. Dimonocarbonsäureester und Mono- bzw. Dialkylester von Mono- bzw. Dihydroxymono- bzw. Dicarbonsäuren sowie die Mono- und Dialkylether von Diolen und höheren Polyolen sowie die Monocarbonsäuren und Monoalkanole selbst eingesetzt werden.

Zum Aufbau der Hauptkette der Polyester sind folgende zwei- und mehrfunktionelle, polyesterbildende Ausgangsstoffe bevorzugt:

als tri- und mehrfuntionelle Polycarbonsäuren, Trimellitsäure, Trimesinsäure, Hemellithsäure, Pyromellithsäure und deren polyesterbildende Derivate sowie sehr bevorzugt Trimellitsäureanhydrid und Trimellitsäuremonoalkylester. Trimellitsäure -monoalkylester sowie -dialkylester und -trialkylester.

als Dicarbonsäuren, z.B. Terephthalsäure, Hexahydrophthalsäure, Tetrahydrophthalsäure, Isophthalsäure, Phthalsäure und aliphatische Dicarbonsäuren mit 2 bis 12 Kohlenstoffatomen sowie deren polyesterbildende Derivate, wie z.B. Azelainsäure, Sebazinsäure, Dodekansäure,

als Triole und mehrfunktionelle Polyole Glycerin, Pentaerythrit und sehr bevorzugt Trimethylolpropan, Trimethylolethan, Di-Trimethylolpropanether und deren Ester und Ether, Glycidylester von Monocarbonsäuren, besonders der sogenannten Versaticsäuren.

als Mono- bzw. Dihydroxycarbonsäure, z.B. Hydroxybernsteinsäure (Apfelsäure) und als Diole, aliphatische Diole mit 2 bis 6 Kohlenstoffatomen wie Monoethylenglykol oder Hexandiol sowie Etherdiole wie Diethylenglykol, Triethylenglykol bis zu Polyether-glykolen mit Mol-Gew. 1.000.

Zum Aufbau der Alkylseitenketten sind geradkettige oder verzweigte Alkanole oder aliphatische Monocarbonsäuren mit 4 bis 36, vorzugsweise 4 bis 18 Kohlenstoffatomen bzw. die Mono- oder ggf. Diester bzw. Mono- oder ggf. Diether der genannten drei- oder mehrfunktionellen Polyole, Polycarbonsäuren oder

Hydroxycarbonsäuren.

Sehr bevorzugt sind verzweigtkettige Alkanole, insbesondere 2-Ethylhexanol oder ggf. tert-Butanol sowie verzweigtkettige aliphatische Monocarbonsäuren wie 2-Ethylhexansäure, Isononansäure oder α,α-Dialkylmonocarbonsäuren in Form der Versaticsäuren, z.B. mit 9 bis 11 Kohlenstoffatomen. Weiter sind entschieden gesättigte polyesterbildende Ausgangsstoffe bevorzugt, d.h. gesättigte Diole und Dicarbonsäuren, gesättigte Tricarbonsäureester oder ggf. Tricarbonsäure, gesättigte Triole und besonders Glycidylester oder ggf. Glyercin. Es können aber auch kleinere Anteile ungesättigter Ausgangsstoffe verwendet werden bis ca. 2 Mol-%, z.B. Maleinsäureanhydrid oder Fumarsäure.

Die erfindungsgemäße Aufgabe ist besonders vorteilhaft unter Verwendung von Trimellitsäure-mono-2-ethylhexylester oder einer Mischung von Trimellitsäureanhydrid und 2-Ethylhexanol lösbar. Weiterhin bevorzugt sind Trimethylolpropanmonoester, besonders der -mono-2-ethylhexansäureester.

In den Polyestern $A_2$ soll das Molverhältnis von Estersegmenten der Hauptkette zu Seitenketten 1 zu 0,02 bis 2,0 betragen. Als Estersegment der Hauptkette wird dabei der 2-wertige Rest aus einem Dicarbonsäurerest verbunden mit einem Diolrest verstanden, ohne Rücksicht darauf, ob dieses Estersegment weitere Carboxylgruppen oder Hydroxylgruppen trägt oder nicht trägt. Zwar wäre ein solches Molverhältnis von 1,0 zu 4,0 denkbar, doch sind Polyester, zumal lineare Polyester, aus einem Dialkanolester einer Tetracarbonsäure und dem Dialkanolester eines Tetraols nur schwer zu verwirklichen. Demgegenüber ist ein Polyester mit dem genannten Molverhältnis 1,0 zu 2,0 mit im Mittel einer Alkylseitenkette je Dicarbonsäurerest und einer Alkylseitenkette je Diolrest, beispielsweise aus Trimellitsäure-mono-2-ethylhexylester und Trimethylolpropan-2-ethylhexylester durchaus herstellbar und sinnvoll.
Molverhältnisse von Estersegmenten der Hauptkette zur Seitenkette von 1,0 zu 0,05 bis 1,0 sind bevorzugt.
Die Polyester gemäß der Erfindung haben bemerkenswerte Eigenschaften.
Insbesondere wird eine Verzweigung der Polyesterketten weitgehend vermieden, so daß nicht nur die teilnehmenden Diole und Dicarbonsäuren, sondern alle Polyole durchschnittlich 2 Hydroxylgruppen zur Polyesterbildung zur Verfügung stellen, alle Polycarbonsäuren ebenfalls 2 Carboxylgruppen polyesterbildend in den Estersegmenten der Hauptkette enthalten haben und in Hydroxycarbonsäuren ebenfalls 2 der funktionellen Gruppen zur Bildung von Estersegmenten der Hauptkette beitragen. Eine geringfügige Kettenverzweigung der Polyesterketten ist jedoch nicht vermeidbar und kann toleriert werden.

Die Polyester $A_1$ und $A_2$ haben eine breite Molgewichtsverteilung und Molekulargewichte von etwa 1.000 bis etwa 10.000 oder mehr, wobei 2.000 bis 5.000 bevorzugt ist. Die OH-Zahl liegt zwischen 10 bis 100, vorzugsweise 20-50 mg KOH/g. Die Polyester sind bei 20° C flüssig. Die Glastemperaturen liegen unter minus 10° C, überwiegend sogar wesentlich darunter. Die Viskositäten in (Pa.s) bei 20° C liegen zwischen 70 und ca. 5.000.

Die Seitenkettenpolyester $A_2$ haben die besondere Eigenschaft, daß bei nur geringer Erhöhung der Temperatur ein wesentliches Absinken der Viskosität die Verflüssigung erfolgt. Damit ist die Aufgabe gelöst, Polyester zur Verfügung zu stellen, deren Verarbeitung lösungsmittelfrei erfolgen kann.
Aufgrund ihrer Struktur sind die erfindungsgemäßen Polyester $A_2$ amorph.
Sehr bemerkenswert ist, daß die genannte Aufgabe nicht nur mit aliphatischen Dicarbonsäurekomponente oder aliphatischen Polycarbonsäurekomponenten, sondern mit aromatischen Dicarbonsäure- und Polycarbonsäurekomponenten, sogar mit ausschließlichem Anteil von aromatischen Polycarbonsäuren gelöst werden kann, obgleich ein Polyester aus beispielsweise Terephthalsäure und Ethylenglykol bei 100° C fest ist und eine Glastemperatur von 73° C aufweist, die auch durch eine Verwendung einer Mischung aromatischer Dicarbonsäuren nicht wesentlich gesenkt werden kann.

Nach dem Stand der Technik mußten Polyester mit tiefen Glasumwandlungstemperaturen einen hohen Anteil aliphatischer Dicarbonsäure oder Diole aufweise, wodurch ihre Haftung zu polaren Oberflächen bei Verwendung als Klebstoff, besonders zu Metallen, sehr gering ist.

Die neuen Polyester $A_2$ besizten auch bei sehr hohen Anteilen aromatischer Bausteine gleichzeitig niedrige Schmelzviskosität und tiefe Glasumwandlungstemperaturen und weisen eine ausgezeichnete Haftung zu Metall auf.

Die Glasumwandlungstemperatur der beschriebenen Polyester liegt bei gleichen Anteilen an aromatischen Dicarbonsäuren wesentlichen tiefer als die der bekannten Polyester.

Die Glasumwandlungstemperatur sinkt mit höherem Mol-Gehalt von Alkylseitenketten und mit zunehmender Länge der Alkylseitenketten.
Beispiel hierfür zeigt Tabelle 1. Auf die Eigenschaften ist es jedoch von geringem Einfluß, ob die Alkylseitenkette an die Dicarbonsäurekomponente oder die Diolkomponente der Estersegmente gebunden ist und ob die Bindung durch eine Etherbrücke oder eine Estergruppe erfolgt.

Zur Herstellung der neuen Polyester $A_2$ können im wesentlichen zwei Wege beschritten werden. Die Monocarbonsäuren und Monoalkanole können (vor der Polyesterbildung)mit tri- oder mehrfunktionellen

Dicarbonsäuren oder deren Anhydriden oder deren esterbildenden Derivaten, insbesondere den Methylestern bzw. den tri- oder mehrfunktionellen Polyolen, zu Monoestern oder ggf. Diestern oder den Monoethern oder ggf. Diethern umgesetzt werden. Diese Verfahrensweise ist insbesondere bei den schwerveresternden Versaticsäuren und ggf. auch bei verzweigten Alkoholen wie 2-Ethylhexanol ratsam. Der Einbau von Versaticsäuren ist durch Verwendung der entsprechenden handelsüblichen Glycidylester möglich, wobei vorzugsweise zunächst mit einer Dicarbonsäure, beispielsweise einer aliphatischen Dicarbonsäure und im zweiten Schritt mit aromatischen Dicarbonsäureanhydriden umgesetzt wird, worauf weitere Polyesterrohstoffe zugegeben werden können.

Zum anderen können Monocarbonsäuren und/oder Monoalkanole bei der Veresterung und Polyesterbildung anwesend sein, wobei auch ein Überschuß der monofunktionellen seitenkettenbildenden Verbindungen möglich und zweckmäßig ist. Die Umesterung und Polyesterbildung kann durch Katalysatoren gefördert werden. Weiterhin kann die statistische Verteilung durch ggf. gesenkte Veresterungstemperaturen und erhöhte Veresterungszeit gefördert werden. Im allgemeinen liegen die Temperaturen bei der Veresterung und Polyesterbildung bei 180 bis 260 °C, vorzugsweise 200 bis 240 °C.
Am Ende der Polykondensation wird vorzugsweise der Druck auf 10 bis 20 mbar gesenkt.
Verzweigte Alkylgruppen, besonders in vorgebildeten Estern der Tricarbonsäurealkylester und Glycidylversaticsäureester werden bei der Polykondensation erfindungsgemäß praktisch nicht abgespalten. Es ist möglich,aber nicht bevorzugt,Monoalkanole zusammen mit Tricarbonsäuren oder Triole und aliphatische Monocarbonsäuren zusammen mit Triolen bei der Polykondensation einzusetzen und so die Alkylseitenketten während der Polykondensation zu bilden.

Es ist aber entschieden vorzuziehen, entsprechende Monoester oder Monoether oder die Di- und Triester vorzubilden, bei denen alle monofunktionellen Alkylseitengruppen bis auf eine pro Mol abgespalten werden.

Erfindungsgemäß ist es in den neuen Seitenpolyestern bevorzugt, daß von 90 % oder mehr der Estersegmente keine konventionellen Zweigketten aus Polyestersegmenten ausgehen.

Bei der Herstellung der Polyester ist überprüfbar, daß die Alkylreste von an der dritten Funktion von Tricarbonsäuren gebundenen Monoalkoholen und an die dritte Funktion von Triolen gebundenen Monocarbonsäure nicht abgespalten werden und in den Hydroxylpolyestern erhalten sind, was auf einfache Weise durch Analyse des Destillats von Veresterung und Polykondensation geschehen kann. An erste und zweite Funktionen polyesterbildender Bestandteile gebundene Alkylseitenketten, z.B. Methanol in Dimethylterephthalat und zwei Alkylgruppen in Tricarbonsäuretrialkylestern werden hingegen abgespalten und treten als freie Alkanole oder Monocarbonsäuren im Destillat auf.
Bei der Herstellung beider Hydroxylpolyester $A_1$ und $A_2$ wird ein Überschuß von Diolen plus Triolen bzw. deren Estern oder Derivaten eingesetzt gegenüber Dicarbonsäuren plus Tricarbonsäuren bzw. deren Estern oder Derivaten und mit Fortschreiten der Polykondensation der Überschuß des Diols entfernt, bis Hydroxylzahlen von 10 bis 100 und Säurezahlen (SZ) unter 5, vorzugsweise unter 3, sehr bevorzugt unter 1, erreicht sind.

Bei der Entfernung der letzten Mengen von überschüssigem Diol und Absenkung der OH-Zahlen auf den Endwert darf nicht Vernetzung durch Abspaltung von Alkylseitenketten eintreten, die sich durch Stehenbleiben des Rührers einem schnellen Anstieg der Viskosität um mindestens eine Zehnerpotenz und Entstehen einer zähelastischen Masse anzeigt. Ein solcher verdorbener Ansatz ist in gleicher Weise zu wiederholen, wobei aber eine um 5 höhere OH-Zahl als die zuletzt gemessene des verdorbenen Ansatzes die endgültige OH-Zahl ist oder ggf. die letzte Temperatur der Polykondensation um 10 °C zu senken ist bzw. der Druck auf 40 bis 50 mbar zu erhöhen ist.
Ein weiterer Weg ist der Einsatz von Tricarbonsäuretrialkylestern (vgl. Beispiel 1) anstelle gleicher Molmengen der Monoester oder des Esters nach Beispiel Ib).
Trimethylolpropan-monoester (Beispiel Ia) und besonders Glycidylester, insbesondere die aller Versaticsäuren, erwiesen sich als sehr stabil.

Die Bestimmung des Glaspunktes (Tg) wurde mit einem Differentialkalorimeter, Mod. DSC 1 der Fa. Perkin-Elmer, durchgeführt.
Die Endgruppenkonzentration wird durch die Säurezahl SZ, Hydroxylzahl OHZ, beide in mg KOH/g bzw. die Carboxylzahl (C) in mVal.COOH/kg Polymer nach H. Pohl, Analytic. Chem. 26 (1954), 1614, gemessen.

Die angegebenen Molekulargewichte sind durchschnittliche Molekulargewichte ($\overline{M}$) aufgrund von Messungen der Gelpermeations-chromatographie (GPC) und Abschätzung aufgrund der enthaltenen Peaks, die Schwerpunkte der enthaltenen Molekulargewichte anzeigen, bzw. mittlere Molekulargewichte (M), berechnet aus der OH-Zahl.

In den Polyestern $A_1$ und $A_2$ werden 10 bis 90 % der Hydroxylgruppen durch Methacrylgruppen oder Acrylgruppen ersetzt. Die so funktionalisierten Polyester erlauben in dünner Schicht die Vernetzung mit

Elektronenstrahlen oder UV-Strahlen. Im Falle von UV-Strahlen wird ein Photosensibilisator, beispielsweise nach Polymers Paint Colour Journal, Vol. 175 (April 1985), Seiten 247 bis 250, in Mengen von 1 % vor der Vernetzung zugesetzt. Die Polyester können gemäß den mit F bezeichneten Beispielen mit an sich beliebigen Acrylverbindungen und Methacrylverbindungen umgesetzt werden, die eine weitere, mit Hydroxylgruppen reatkionsfähige Gruppe, wie die Isocyanatgruppe, eine Ethergruppe oder eine Glycidylgruppe enthalten, wobei im Falle von Glycidylacrylaten und Methacrylaten zunächst durch Umsetzung mit Dicarbonsäure ein Carboxylpolyester herzustellen ist.

Als Haftklebstoffe werden dabei flächige Beschichtungen auf Papier, Kunststoff o.dgl. verstanden, welche die besondere Eigenschaft der Dauerklebrigkeit aufweisen. Diese bevorzugte Verwendung ist besonders für die beanspruchten Polyester geeignet, da auf diese Weise Haftklebstoffe herstellbar sind, die nicht Lösungs- oder Verdünnungsmittel enthalten, welche bei der Vernetzung stören.

Bei der Herstellung der Haftkleber kann mit besonderem Vorzug zunächst einer der Polyester $A_1$ oder $A_2$ hergestelltwerden und darauf anschließend im selben Gefäß die Umsetzung mit Acrylatverbindungen oder Methacrylatverbindungen nach b) erfolgen. Im selben Gefäß kann darauf jeder weitere Zusatz von Hilfsstoffen erfolgen oder, falls gewünscht, die nicht mit (Meth)acrylatgruppen umgesetzten OH-Gruppen der Polyester mit weiteren reaktiv härtbaren oder nichtreaktiven Gruppen umgesetzt werden. Vorzugsweise bleiben aber die restlichen 10 bis 90 % Hydroxylgruppen, die nicht durch (Meth)acrylatgruppen ersetzt sind, in den Haftklebstoffen erhalten.

Die so mit Methacrylatgruppen oder Acrylatgruppen funktionalisierten Hydroxylpolyester $A_1$ und/oder $A_2$ sind direkt strahlenvernetzbare Makromere, welche überraschend bei 50 bis 100° C eine genügend niedrige Viskosität besitzen, um in dünner Schicht auf ein flächiges Substrat, d.h. Papier oder Kunststoffbahnen aufgetragen zu werden und durch Strahlenvernetzung den Haftklebstoff zu bilden. Überraschend sind also Lösungsmittel oder Verdünnungsmittel in den strahlungsvernetzbaren Makromeren abwesend und nicht erforderlich, wodurch die nach dem Stand der Technik für Haftklebstoffe nötige Abdampfung von Lösungsmitteln o. dgl entfällt und die Verarbeitung wesentlich erleichtert ist.

Weiter ergeben besonders die bevorzugten Polyesters $A_2$ nach der Funktionalisierung elastischere und besonders kältebeständigere Haftklebstoffe. Die Dauerklebrigkeit bleibt auf ungewöhnlich lange Zeit erhalten und ist über den Anteil der (Meth)acrylatgruppen und durch Auswahl der Bestandteile der Polyester in der Haftkraft auf den jeweiligen Verwendungszweck einstellbar.

Der besondere Vorteil der strahlungsvernetzbaren Makromere ist erfindungsgemäß die bisher nicht erreichbare niedrige Viskosität.

In zweiter Stufe erfolgt die Umsetzung von 10 bis 90 % der Hydroxylgruppen der Polyester durch Acrylatverbindung und somit die Ersetzung von 10 bis 90 % der vorhandenen Hydroxylgruppen durch Acrylatgruppen.

Die Art der einzusetzenden Acrylatverbindungen oder Methacrylatverbindungen ist an sich gleichgültig, solange die jeweilige Verbindung eine mit der Hydroxylgruppe der Polyester reaktionsfähige weitere Gruppe aufweist.

Im einfachsten Falle kann die Acrylsäure, Methacrylsäure oder Acrylchlorid, Methacrylchlorid oder die Anhydride der Acrylsäure bzw. Methacrylsäure verwendet werden. Diese Funktionalisierung gemäß $b_5$) ist nicht bevorzugt, weil diese Verbindungen schwer handhabbar sind. Es müssen die üblichen Polymerisationsinhibitoren, wie unter $b_2$) beschrieben, zugegeben werden.

Gemäß $b_1$) kann weiter Isocyanato-alkylacrylat oder Isocyanato-alkylmethacrylat zur Funktionalisierung verwendet werden, wobei Alkyl die Bedeutung Ethyl oder Propyl hat.

Gemäß $b_2$ können Addukte im Verhältnis 1 : 1 verwendet werden, welche eine Isocyanatogruppe und einen Acrylatrest bzw. einen Methacrylatrest aufweisen. Diese Addukte werden vor der Umsetzung mit den Hydroxylpolyestern hergestellt aus einerseits Diisocyanaten oder ggf. Polyisocyanaten oder Isocyanatopraepolymeren von Polyestern oder Polyethern mit niedrigem Molekulargewicht, welche zwei Isocyanatgruppen im Molekül aufweisen und andererseits etwa äquivalente Molmengen Hydroxyalkylacrylate bzw. Hydroxyalkylmethacrylate.

Bevorzugt sind als die Isocyanate Toluylendiisocyanat, Methylendiphenyl-4,4'-diisocyanat, Hexamethylendiisocyanat, Benzol-1,4-diisopropylisocyanat, Isophorondiisocyanat und weitere Diisocyanate. In gleicher Weise können auch Triisocyanate verwendet werden, die auch mit zwei Mol Hydroxyalkylacrylat umgesetzt werden. Isocyanat-praepolymere können in vorgebildeter Form, beispielsweise als Desmodur PF (Bayer AG) verwendet werden, oder aus beispielsweise Triethylenglykol durch Umsetzung mit den genannten Diisocyanaten hergestellt werden. In gleicher Weise kann beispielsweise ein Umsetzungsprodukt der Molekulargröße 3 oder 5 von 2 Molen Ethylenglykol und 1 Mol einer Dicarbonsäure mit einem der Diisocyanate umgesetzt werden und nachträglich mit Hydroxylalkylacrylaten zur Umsetzung kommen, so daß das genannte Addukt gebildet wird.

Zur Bildung der Addukte sind Temperaturen von 50 bis 120° C ausreichend. Est ist ohne Zutritt von Luftfeuchtigkeit zu arbeiten und eine Umsetzung der Isocyanate und Polyisocyanate bis auf einen Rest von ca. 10 % durch Analyse festzustellen.

Weiter kann gemäß $b_3$ Methyl-acrylamidoglykolat-methylether (MAGME) der Fa. Dyno Cyanamid C.V., Rotterdam oder der entsprechende Acrylamidoglykolat-methylether verwenddet werden. Hier erfolgt eine Umetherung, wobei unter den unten genannten Reaktionsbedingungen das freiwerdende Methanol entfernt wird.

Weiter kann gemäß $b_4$ zunächst eine Umsetzung von 10 bis 90 % der Hydroxylgruppen des Polyesters mit einer Dicarbonsäure oder bevorzugt mit einem Anhydrid einer Dicarbonsäure, beispielsweise mit Phthalsäureanhydrid oder jedem anderen aliphatischen oder aromatischen Dicarbonsäureanhydrid erfolgen. Diese Umsetzung erfolgt zweckmäßig direkt nach Bildung des Polyesters. Durch die Menge des Dicarbonsäureanhydrids bleiben die gewünschte Menge der Hydroxylgruppen erhalten. Anschließend werden die durch Umsetzung der Dicarbonsäure oder des Dicarbonsäureanhydrids entstandenen Carboxylgruppen mit Glycidylacrylat oder Glycidylmethacrylat, bevorzugt unter Zugabe eines Polymerisationsinhibitors, umgesetzt.

Sofern nicht anders gesagt, erfolgt die Umsetzung der Hydroxylgruppen des Polyesters mit 1,0 bis 1,1 Mol der Stoffe $b_1$ bis $b_5$ je Mol der umzusetzenden OH-Gruppen bei 60 bis 150° C und Drucken von 300 mbar bis Normaldruck unter Ausschluß von Luftfeuchtigkeit.

In gleicher Weise kann die Umsetzung mit den Acrylatverbindungen oder Methacrylatverbindungen auch aus bereits hergestellten Polyestern bei den genannten Temperaturen erfolgen. Es können beliebige andere Acrylatverbindungen und Methacrylatverbindungen verwendet werden, welche in der Lage sind, mit den Hydroxylgruppen oder mit Carboxylgruppen eines Carboxylpolyesters (der aus dem Hydroxylpolyester durch Umsetzung mit Dicarbonsäureanhydriden entsteht) reaktionsfähig sind.

Auf diese Weise entstehen die acrylatfunktionellen oder methacrylatfunktionellen Makromere, welche durch Strahlenvernetzung Haftklebstoffe liefern, wobei in der verwendeten dünnen Schicht 2 bis 5 Mrad durch die überraschend hohe Reaktivität der funktionalisierten Makromere ausreichend sind.

Durch die niedrige Viskosität der funktionalisierten Makromere ist es möglich, bei 50 bis höchstens 100° C auf Papier oder Kunststoffolien, beispielsweise mit einem Rakel oder durch Streichen, 5 bis 200 g Makromere in einem Arbeitsgang aufzutragen und durch Strahlung mittels eines Elektronenstrahlers (EB) oder durch UV-Strahlen die Vernetzung zum Haftklebstoff durchzuführen. Bei UV-Strahlenvernetzung ist ein Photoinitiator bzw. Photosensibilisator in Mengen von 0,5 bis 1,5 % den Makromeren zuzusetzen, was direkt nach Herstellung erfolgen kann. Geeignete Photoinitiatoren sind in Polymers Paint Colour Journal, Vol. 175 (April 1985), Seiten 247 bis 250, beschrieben.

In den Beispielen sind die Beispiele der Funktionalisierung mit F und die Beispiele der Vernetzung mit V gekennzeichnet.

## Beispiel 1

In einem Reaktor mit aufgesetzter Kolonne, Kontroll- sowie Kontaktthermometer wird unter Rühren und Stickstoffatmosphäre aus 464 g (2,417 Mol) Trimellitsäureanhydrid und 990 g (7.615 Mol) 2-Ethylhexanol der Triester mit 0,75 g Octylenglykoltitanat als Katalysator durch Veresterung bei 160 bis 210° C in 5 Stunden unter Einhaltung einer Kolonnenkopftemperatur von ca. 102° C hergestellt. Wenn eine Säurezahl von < 3 mg KOH/g erreicht ist, werden 333 g (3.142 Mol) Diethylenglykol zugegeben und die Kolonne geschlossen. Nach Umstellen auf eine Destillationsbrücke wird umgeestert und bei 200 bis 230° C 2-Ethylhexanol so abdestilliert, daß die Brüdentemperatur 165° C nicht überschreitet. Wenn die Brüdentemperatur bei einer Innentemperatur von 230° C auf < 100° C fällt, wird Vakuum angelegt (800 mbar fallend auf 300 mbar), so daß die Brüdentemperatur im Bereich 100 bis 165° C liegt. So wird umgeestert, bis die Endkennzahlen erreicht sind. Dann wird das Vakuum mit Stickstoff aufgehoben und das Produkt gekühlt.

Kenndaten: SZ < 0,2 mg KOH/g $\overline{M}$ = 4.000-5.000
OHZ 40,0 mg KOH/g
$V_{20}$ 88 Pa.s
$T_g$ - 38° C

Es wurden dabei im Destillat des Ansatzes 676 g 2-Ethylhexanol und 84 g Diethylenglykol gefunden.

Im hergestellten Produkt errechnet sich daraus, daß 1 Mol 2-Ethylenhexanol je Mol Trimellitsäure gebunden und als Alkylseitenkette enthalten ist, was sich durch Analysen bestätigt. Das Verhältnis von Estersegmenten zu Alkylseitenketten ist 1 : 1 Mol.

Bei Folgeansätzen dieses Alkylseitenketten-Polyesters kann das Destillat als Quelle für 2-Ethylhexanol eingesetzt werden, wobei bei der Polyesterbildung die Menge Diethylenglykol entsprechend der schon zugesetzten Menge vermindert wird.

Beispiel 2

13,57 kg Glycidylester der Versaticsuaure 10(Cardura(R)E10+ der Shell) 2 wurden in einem Reaktor mit aufgesetzter Kolonne, Kontroll- sowie Kontaktthermometer unter Rühren und Stickstoffatmosphäre auf 110° C erwärmt. Zum Glycidylester wurden dann 4,35 kg Adipinsäure und 67 g DYNAPOL A 1 V$^{(R)}$ (1) zugegeben. Die Glycidyladipatbildung fand unter schwacher Wärmetönung statt, die eine Temperatursteigerung auf 140° C zur Folge hatte. Die Temperatur von 140° C wurde 30 min. gehalten. Danach erfolgte die Zugabe von 8,81 kg Phthalsäureanhydrid und 5,52 kg Diethylenglykol. Der Reaktorinhalt wurde in 1 Std. 30 min. auf 235° C geheizt. Nach 5 Std. bei 235° C wurden 22 g Octylenglykoltitanat zugegeben und ein Vakuum von 150 mbar angelegt. Der Druck wurde innerhalb von 2 Std. 30 min. bis auf 10 mbar, danach weiter auf 5 mbar gesenkt. Nach 4 Std. unter diesen Bedingungen wurde die Kondensation durch Brechen des Vakuums und Kühlen des Produktes beendet. Das Produkt hatte eine SZ < 1 mg KOH/g und eine OHZ von 40 mg KOH/g sowie eine Viskosität $V_{20}$ = 4.350 Pa.s.

Die Glasumwandlungstemperatur liegt bei -15° C.

$\overline{M}$ = 2.800 bis 3.800

Im Destillat wurde nur der Überschuß des Diethylenglykols gefunden, aber praktisch keine Versaticsäure. Dementsprechend ist der Rest der Versaticsäure als Alkylseitenkette an den Glycerinrest des Polyesters gebunden, was durch Analysen bestätigt wurde. Das Verhältnis von Estersegmenten zu Alkylseitenketten beträgt 1 : 0,53 Mol.

2) Versaticsäure der Gesamtkohlenstoffanzahl 10 mit $\alpha,\alpha'$-Kettenverzweigung durch überwiegend Methylgruppen mit einem kleineren Anteil Ethylgruppen.

1) Addukt aus phosphoriger Säure und 3 Mol Versaticsäure 10 (Cardura (R) 10 der Shell) nach EP-$A_1$ 0 117 912, als Schutz vor oxidativem Abbau.

Beispiel 3

In einem Reaktor mit aufgesetzter Kolonne, Kontroll- sowie Kontaktthermometer werden unter Rühren und Stickstoffatmosphäre bei gleichzeitigem Aufheizen chargiert: 13,42 kg Trimethylolpropan/2-Ethylhexansäure-monoester (Beispiel Ia), 1,88 kg Monoethylenglykol, 5,00 kg Hexandiol-1,6, 7,37 kg Adipinsäure, 8,38 kg Isophthalsäure und 45 g DYNAPOL A 1 V. $^{(R)}$2).

Bei ca. 140° C beginnt die Wasserabspaltung, die unter Kontrolle der Kolonnenkopftemperatur (ca. 105° C) durchgeführt wird.

Nach 2 bis 3 Stunden ist die Endtemperatur von 240° C erreicht. Nach 5 bis 6 Stunden sind 3,70 kg Destillat angefallen.

Es werden 15 g Octylenglykoltitanat zugegeben und Vakuum angelegt. Nach ca. 3 Std. bei Druckverminderung auf bis zu 10 mbar sind die Endkennzahlen erreicht.

Das Vakuum wird mit Stickstoff aufgehoben und das Produkt gekühlt.

Kenndaten: SZ 1 mg KOH/g $\overline{M}$ = 3.200 - 4.800

OHZ 33 mg KOH/g

$V_{20}$ 948 Pa.s

$T_g$ -34° C

Im Destillat findet sich der Überschuß des Ethylenglykols jedoch praktisch nicht Hexandiol und 2-Ethylhexansäure. Dementsprechend findet sich der Rest des 2-Ethylhexanols als Alkylseitenkette an den Trimethylolpropanrest im Polyester gebunden, was durch Analysen bestätigt wird. Das Verhältnis der Estersegmente zu Alkylseitenketten beträgt 1 : 0,40 Mol.

2) wie in Beispiel 2

Beispiele 4 bis 11 sowie Vergleichsbeispiele A bis C

Beispiel 11 wird wie folgt durchgeführt:

50,6 g Monoethylenglykol (0,817 mol) und 0,122 g Butyltitanatlösung 36,8 %ig in 2-Ethylhexandiol-1,3 wurden mit 97,0 g Monoester der 2-Ethylhexansäure des Trimethylolpropans 0,35 Mol in einem Rundkolben mit aufgesetzter Kolonne, Thermometer und Rührer unter Stickstoffatmosphäre erwärmt. Bei ca. 80° C erfolgte die Zugabe von 136 g Dicarbonsäuregemisch ($C_4$-$C_6$) (1 Mol). In 30 Minuten wurde die Temperatur auf 150° C, bei beginnender Reaktionswasserabspaltung, gesteigert. Nach 4 Stunden wurden 240° C erreicht bei einer SZ von 14,5 mg KOH/g. Nach weiteren 60 Minuten betrug die SZ 14,0 mg KOH/g. Es wurden ein Vakuum von 100 mbar angelegt und auf 20 mbar gesenkt. Nach 3 Stunden wurde durch Brechen des Vakuums und Kühlen des Produktes die Kondensation beendet.

Das Produkt hatte eine SZ von 1,4 mg KOH/g und eine OHZ von 40 mg KOH/g und eine Glastemperatur von unter -20° C.

Die Beispiele 4 bis 10 und die Vergleichsbeispiele A bis C werden aus den in der Tabelle 1 enthaltenen Bestandteilen in den genannten Molverhältnissen und gleichen Bedingungen wie in Beispiel 11 hergestellt, wobei der gleiche Überschuß von Ethylenglykol verwendet wird. Die Polykondensation wird bei einer Säurezahl unter 2 bei Erreichen der OH-Zahl von 40 abgebrochen. Die Molgewichte (M) liegen zwischen 2.600 und 3.500.

Beispiel Ia

Darstellung des Monoesters aus 2-Ethylhexansäure und Trimethylolpropan

165,6 g 2-Ethylhexansäure (1,15 Mol) wurden in einem Rundkolben mit aufgesetzter Kolonne, Thermometer und Rührer unter Stickstoffatmosphäre erwärmt und 134,0 g Trimethylolpropan (1,0 Mol) sowie 0,86 g Ester der phosphorigen Säure ($H_3PO_3$) hergestellt aus Versaticsäureglycidylester und $H_3PO_3$ und 0,137 g Butyltitanatlösung 36,8 %ig zugegeben. Nach 60 Minuten wurden 185° C erreicht, bei beginnender Abspaltung des Reaktionswassers.

Nun wurde die Reaktionstemperatur auf 255° C gesteigert. Nachdem 93,6 % Reaktionswasser abdestilliert war, wurde die aufgesetzte Kolonne entfernt und auf den unteren Weg umgestellt. Bei Erreichen einer SZ von ca. 6,2 mg KOH/g wurde durch Kühlen des Produktes die Kondensation beendet. Im Produkt sind 1,0 Mol 2-Ethylhexansäure je Mol Trimethylolpropan enthalten.

Beispiel Ib

Trimellitsäure-2-ethylhexylester

In einen 1 l-Rundkolben werden 193 g (1 Mol) Trimellitsäureanhydrid und 234 g (1,8 Mol) 2-Ethylhexanol sowie 0,2 g Octylenglykoltitanat vorgelegt. Unter $N_2$-Einleitung und Rühren wird auf 150° C erhitzt, wobei die Wasserabspaltung beginnt. Innerhalb 4 Stunden wird die Temperatur auf 220° C gesteigert, das Destillat wird mittels einer Vigreux-Kolonne getrennt, die Kopftemperatur beträgt hierbei 100 bis 105° C. Die Badtemperatur wird so lange gehalten, bis die Kopftemperatur unter 80° C fällt. Das Produkt besitzt eine Säurezahl von 150 ± 10 mg KOH/g. Im Produkt sind 1,7 Mol 2-Ethylhexanol je Mol Trimellitsäure enthalten.

TABELLE 1

Molverhältnisse und Eigenschaften der hergestellten Polyester

| Beispiel | IS | TPS | PS | DCS | AS | TTE | MEG | DEG | HD | GV | TMME | Glas-temp. (°C) | Visk. Pa.s 20°C |
|---|---|---|---|---|---|---|---|---|---|---|---|---|---|
| 1 | -- | -- | -- | -- | -- | $100^{x}$ | -- | 100 | -- | -- | -- | -38 | 80 |
| 2 | -- | -- | 67 | -- | 33 | -- | -- | 47 | -- | $53^{xx}$ | -- | -15 | 4.350 |
| 3 | 50 | -- | -- | -- | 50 | -- | 25 | -- | 35 | -- | $40^{x}$ | -34 | 950 |
| 4 | -- | 25 | 25 | -- | -- | $50^{xxx}$ | 100 | -- | -- | -- | -- | -10 | 3.100 |
| 5 | -- | -- | -- | -- | -- | $100^{xxx}$ | 100 | -- | -- | -- | -- | -53 | 1.200 |
| 6 | -- | 20 | 20 | 60 | -- | -- | 70 | -- | -- | -- | $30^{x}$ | -22 | 1.800 |
| 7 | -- | 20 | 20 | 60 | -- | -- | 70 | -- | -- | -- | $30^{x3}$ | -30 | 1.900 |
| 8 | -- | 10 | 10 | 60 | -- | $20^{xxx}$ | 100 | -- | -- | -- | -- | -23 | 2.000 |
| 9 | -- | 10 | 10 | 60 | -- | $20^{x2}$ | 100 | -- | -- | -- | -- | -26 | 1.700 |
| 10 | -- | -- | -- | 60 | -- | $40^{xxx}$ | 100 | -- | -- | -- | -- | -31 | 300 |
| 11 | -- | -- | -- | 100 | -- | -- | 70 | -- | -- | -- | $30^{x}$ | -41 | 130 |
| A | -- | 50 | 50 | -- | -- | -- | 100 | -- | -- | -- | -- | +55 | fest |
| B | -- | 20 | 20 | 60 | -- | -- | 100 | -- | -- | -- | -- | -12 | 2.300 |
| C | -- | -- | -- | 100 | -- | -- | 100 | -- | -- | -- | -- | -35 | 140 |

Zu Tabelle 1:

PS = Phthalsäure
TPS = Terephthalsäure
AS = Adipinsäure

| | |
|---|---|
| IS = | Isophthalsäure |
| DCS = | aliphatische Dicarbonsäure von $C_4$ bis $C_6$ - Gesamtkohlenstoff (Gemisch gleicher Teile) |
| MEG = | (Mono-)Ethylenglykol |
| DEG = | Diethylenglykol |
| HD = | Hexandiol-1,6 |
| TTE = | Trimellitsäure-alkylester |
| GV = | Glycidylester der Versaticsäure 10 |
| TMME = | Trimethylolpropan-monoester |
| x = | Tri-2-ethylhexylester |
| xx = | Versaticsäure-10-ester |
| xxx = | Mono-2-Ethylhexylester |
| x2 = | Monolaurylester |
| x3 = | Kokosfettsäureester |

Beispiel 12 bis 15

Beispiel 2 wird wiederholt, wobei jedoch die Menge des Glycidylesters variiert wird, nämlich auf 2 (Beispiel 12), 20 (Beispiel 13), 40 (Beispiel 14) und 70 (Beispiel 15), wodurch 98 Mol-% Diethylenglykol in Beispiel 12 und in den folgenden 80, 60 und 30 Mol-% Diethylenglykol im Produkt enthalten sind und ein dem Beispiel 2 entsprechender Überschuß Diethylenglykol im Ansatz verwendet wird.
Mit steigendem Gehalt von Glycidylestern sinkt die Glastemperatur Tg und die Viskosität.

Beispiele 16 bis 18

Beispiel 3 wird wiederholt, wobei jedoch im Produkt 5 Mol-% (Beispiel 16), 20 Mol-% (Beispiel 17) und 50 Mol-% Trimethylolpropan-mono-2-ethylhexylester (Beispiel 18) und entsprechend 60 Mol-% (Beispiel 16), 45 Mol-% (Beispiel 16) und 15 Mol-% (Beispiel 17) MEG bei gleichen Anteilen von 35 Mol-% Hexandiol-1,6 und jeweils 50 Mol-% Isophthalsäure und 50 Mol-% Adipinsäure enthalten ist. Im Ansatz wird ein Überschuß MEG zugesetzt und mit Fortschreiten der Polykondensation entfernt. Die Produkte haben eine OHZ von 40.

Beispiel 19

Polyester mit Alkylseitenketten
aus Adipinsäure 60 Mol-%
Phthalsäureanhydrid 40 Mol-%
Cardura E 10$^R$ 33 Mol-%
Hexandiol-1,6 55 Mol-%
Neopentylglykol 12 Mol-%
Entsprechend der Verfahrensweise von Beispiel 2 wurde ein Alkylseitenkettenpolyester hergestellt aus folgenden Ausgangsstoffen:
Glycidylester von Versaticsäure E10 (Cadura $^{(R)}$E10 = 8,89 kg; Hexandiol-1,6 = 7,66 kg; Neopentylglykol = 1,48 kg und den Säurekomponenten Adipinsäure = 8,94 kg; Phthalsäureanhydrid = 6,04 kg sowie Dynapol A1V $^{(R)}$(vgl. Beispiel 2) = 67 g; Octylenglykoltitanat = 22,5 g.

Kennzahl SZ <1, OHZ = 30, $V_{20}$ = 795 Pa.s, TG = -31 ° C

Beispiel 20

Polyester mit Alkylseitenketten der Zusammensetzung
Adipinsäure 40 Mol-%
Phthalsäureanhydrid 40 Mol-%
Isophthalsäure 20 Mol-%
Cardura $^R$ E10 33 Mol-%
Hexandiol-1,6 40 Mol-%
Neopentylglykol 17 Mol-%
Entsprechend der Verfahrensweise von Beispiel 2 wurde der Polyester aus folgendem Ausgangsstoff hergestellt: Gylcidylester von Versaticsäure 10 (Cardura$^R$ E10) = 8,78kg; Hexandiol-1,6 = 6,89 kg; Neopentylglykol = 2,07 kg; Adipinsäure = 5,89 kg; Phthalsäureanhydrid = 5,97 kg; Isophthalsäure = 3,35 kg

sowie Dynapol A1V(R) = 67 g und Octylenglykoltitanat = 22,5 g.

Der erhaltene Polyester hatte die Kennzahlen:
Säurezahl unter 1, OHZ = 38, $V_{20}$ = 2.610 Pa.s, TG = -22° C.

Beispiel 21

Polyester mit Alkylseitenketten der Zusammensetzung
Adipinsäure 100 Mol-%
Hexandiol-1,6 35 Mol-%
Monoethylenglykol 25 Mol-%
Trimethylolpropan-monoester der Ethylhexylsäure 40 Mol-%
Entsprechend der Verfahrensweise von Beispiel 2 wurde ein Polyester hergestellt aus den Ausgangsstoffen: Adipinsäure = 15,19 kg; Hexandiol-1,6 = 4,97 kg; Monoethylenglykol = 1,87 kg; Trimethylolpropan-monoethylhexylester (vgl. Beispiel Ia) = 13,40 kg sowie Dynapol A1V(R) = 30 g und Octylenglykoltitanat = 15 g.
Kennzahlen:SZ unter 1, OHZ = 24, $V_{20}$ = 70,8 Pa.s,TG = -50° C

Beispiele für Funktionalisierung mit Acrylaten

Beispiel II a

Herstellung des IPDI/HEA - 1:1 Adduktes
Rohstoffe für 100 kg:
Isophorondiisocyanat (IPDI) 65,68 kg
2-Hydroxyethylacrylat(HEA) 34,32 kg
Dibutylzinndilaurat (DBTL) 50 g
Polymerisationsinhibitor 50 g
(2,6-Di-tert.-butyl-4-methylphenol)
In einem Reaktor werden IPDI, DBTL und der Polmerisationsinhibitor vorgelegt und auf 40° C erwärmt. HEA wird unter Rühren während 3 Std. gleichmäßig zudosiert. Sobald durch exotherme Reaktion die Temperatur auf 60° C ansteigt, wird gekühlt, so daß die Temperatur 80° C nicht übersteigt, jedoch 50° C nicht unterschritten werden. Nach beendeter HEA-Zugabe wird so lange der Reaktorinhalt auf 60° C gehalten, bis der NCO-Gehalt auf 12,2 % nach 2 Std. gesunken ist. Viskosität von 8.000 bis 12.000mPa.s bei 20° C. Das Produkt kann für kurze Zeit an der offenen Luft gehandhabt werden, muß jedoch bei längerer Aufbewahrung gegen Luftfeuchtigkeit in geschlossenen Fässern geschützt werden.

Funktionalisierung von Polyestern durch Acrylierung

Beispiel F1

Der Polyester nach Beispiel 2 wird direkt nach der Herstellung auf 120° C abgekühlt und das Vakuum auf 400 mbar eingestellt bzw. ein fertiger Polyester nach Beispiel 2 wird auf 120° C bei einem Vakuum von 400 mbar erwärmt. Unter Rühren werden je 100 kg des Polyesters nach Beispiel 2 12,5 kg des Addukts nach Beispiel IIa zugegeben und 1 Std. gerührt bis der NCO-Gehalt auf unter 0,2 % abgesunken ist.

Durch diese Reaktion wurden die Hydroxylgruppen des Polyestersnach Beispiel 2 von ursprünglich einer OH-Zahl von 40 zu 50 % umgesetzt, so daß nunmehr anstelle der Hälfte aller Hydroxylgruppen Acrylatreste stehen. Ein solches Produkt wird A 50 genannt.
Viskosität bei 50° C 114 Pa.s TG -5° C

Beispiele F2 und F3

In entsprechender Weise wie Beispiel F1 wird der Polyester nach Beispiel 2 mit 7,5 kg (Beispiel F2) und mit 17,5 kg (Beispiel F3) des Adduktes nach Beispiel IIa entsprechend Beispiel F1 umgesetzt.
In Beispiel F2 beträgt die Funktionalisierung 30 % der vorhandenen Hydroxylgruppe das Polyesters (Produkt A 30). Die Viskosität bei 50° C beträgt 192 Pa.s, TG -10° C.

Das Produkt von Beispiel F3 ist zu 70 % funktionalisiert (Produkt A 70). Die Viskosität 40° C beträgt 310 Pa.s, TG -4° C.

Beispiel F4

Nach der Verfahrensweise des Beispiels F1 wird der Polyester nach Beispiel 1 mit 12,5 kg des Produktes nach Beispiel IIa je 100 kg des Polyesters zur Reaktion gebracht. Es entsteht ein Produkt mit einer 50 %igen Funktionalisierung der Hydroxylgruppen. Viskosität bei 50° C beträgt 35 Pa.s, TG -32° C.

Beispiel F5

Der Polyester nach Beispiel 3 wird entsprechend der Verfahrensweise des Beispiels F1 mit 12,5 kg des Adduktes nach Beispiel IIa zur Reaktion gebracht. Es entsteht ein funktionalisierter Polyester mit Viskosität bei 50° C von 88 Pa.s, TG -25° C.

Beispiel F6

Der Polyester nach Beispiel 2 wird auf 150° C unter Rühren erwärmt und mit 11,8 kg Stahlsäureanhydrid je 100 kg des Polyesters versetzt . Nach 30 min. ist die Hydroxylzahl auf 17 mg KOH/g gesunken, während die Säurezahl 18 mg KOH/g erreicht. Darauf werden 9,1 kg Glycidylmethacrylat sowie 50 g Hydrochinon als Polymerisationsinhibitor zugesetzt und weitere 30 min. bei 150 bis 170° C unter Rühren umgesetzt. Das Produkt wird abgekühlt und abgefüllt. Die Säurezahl beträgt 2 mg KOH/g, die Viskosität bei 20° C beträgt 4.500 Pa.s, TG -10° C.

Beispiel F7

Der Polyester nach Beispiel 2 wird auf 150° C unter Rühren erwärmt. Pro 100 kg des Polyesters werden 4,6 kg Methylacrylamidoglykolat-methylether (MAGME) sowie 50 g p-Toluolsulfonsäure und 50 g Hydrochinon zugegeben und anschließend weiterer 50 min. bei 150° C reagieren gelassen.
Es entsteht ein Polyester, dessen Hydroxylgruppen zu 50% acryliert sind.
Viskosität bei 20° C 4.300 Pa.s, TG -15° C.

Beispiel F8

Harzzusatz

Der funktionalisierte Polyester nach Beispiel F2 wird in Mengen von 800 Teilen mit 200 Teilen Polyvinylmethylether (Lutonal M 40 der Fa. BASF) bei 70° C in einem Kneter homogenisiert.
Soweit die Vernetzung mit UV-Strahlen ausgeführt wird, werden danach 1 % Darokur 1173 der Fa. Merk als Photoinitiator zugefügt.

Vernetzung zu Haftklebstoffen aus funtionalisierten Polyestern

V 1 - Elektronenstrahlvernetzung

Mittels einer Rakel wird auf ein Papier von 80 g/m$^2$ oder eine entsprechende Kunststofffolie einer der in den Beispielen F genannten funktionalisierten Polyestern bei 100° C mit einem Auftragsgewicht von 20 g/cm$^2$ aufgetragen und bei einer Strahlendosis von 3 Mrad mittels eines Elektronenstrahlers (Elektrocurtain Fa. Energy Sciences Int.) vernetzt.

V 2 - UV-Strahlenvernetzung

Die unter V1 genannte Auftragsweise und die dort genannten Polyester werden in gleicher Weise und bei gleichen Temperaturen verwendet, wobei stets als Photoinitiator 1 % Darocur 1173 (Fa. Merk) im funktionalisierten Polyester verteilt ist.
Die Vernetzung erfolgt durch eine Bestrahlungszeit von 0,5 sec. mittels eines UV-Strahlers, Hersteller: Fa. Theimer, mit Strahlungsleistung von 100 W/cm.

Es können auch Auftragstemperaturen von 50° C aufwärts gewählt werden, soweit die funktionalisierten Polyester eine voranstehend genannte niedrige Viskosität aufweisen.

Die Eigenschaften der so erhaltenen Haftklebstoffe sind in der nachfolgenden Tabelle genannt.

TABELLE 2

| Polyester n. Beispielen | Acryl.-Grad | Vernetzung | Schälkraft (N/2,5cm) | Scherstandfestigkeit | Quick-Stick (N/2,5 cm) | Kugelroll-Tack (cm) |
|---|---|---|---|---|---|---|
| 1 + F4 | 50 | UV | 4 | 10 min. | 2 | -- |
| 3 + F5 | 50 | UV | 20 | 2,5 h | 5 | 4 |
| 3 + F5 | 50 | EB | 10 | 2,0 h | 5 | 20 |
| 2 + F2 | 30 | EB | 18 | 9,0 h | 18 | 20 |
| 2 + F1 | 50 | UV | 19 | 45 min. | -- | 20 |
| 2 + F3 | 70 | UV | 4 | 2,0 h | -- | 20 |
| 2 + F8 | 30 | EB | 23 | 24,0 h | 20 | 20 |
| 2 + F7 | 50 | UV | 20 | 8,0 h | -- | 20 |
| 2 + F6 | 50 | UV | 12 | 2,0 h | -- | 20 |

Beispiel F9 mit Polyester gemäß $A_1$

In einen 2 1-Rundkolben werden unter Rühren und Feuchtigkeitsausschluß 800 g eines Polyesters der Zusammensetzung:

Adipinsäure/Ethylenglykol/Neopentylglykol/Hexandiol-1,6/ Trimethylolpropan = 100/54/14/29/3 mit einem Molekulargewicht von 5500 mit 20 g Isocyanatoethylmethacrylat bei 80°C innerhalb von 60 Minuten umgesetzt, so daß der NCO-Gehalt des Produktes kleiner 0,1 % beträgt. Die Viskosität des Endproduktes bei 25°C beträgt 140 Pas.

Beispiele F10 und F 11

Es wird analog Beispiel F9 verfahren, wobei anstatt 20 g Isocyanatoethylmethacrylat 26,7 g bzw. 33,3 g eingesetzt werden.

Beispiele F12 und F16 (Polyester $A_1$ mit 1:1 Addukten gemäß b2)

In einen 1 1-Rundkolben wird jeweils 1 Mol der nachfolgend aufgeführten Diisocyanate bei Raumtemperatur vorgelegt. Unter Rühren und Einleitung von Stickstoff werden im Verlauf einer Stunde 116 g Hydroxyethylacrylat zugetropft. Nach weiteren 30 Minuten hat sich ursprünglich vorhandener NCO-Gehalt der Mischung auf den halben Wert gesenkt.

| Beispiel | Diisocyanat | NCO-Gehalt des Adduktes | Zusatz zu 800 g Polyester |
|---|---|---|---|
| F12 | Toluylendiisocyanat | 14,5 % | 37,2 g |
| F13 | Methylendiphenyl-4,4'-diisocyanat | 11,5 % | 47,0 g |
| F14 | Hexamethylendiisocyanat | 14,8 % | 36,4 g |
| F15 | Benzol-1,4-diisopropylisocyanat | 11,7 % | 46,2 g |
| F16 | Isophorondiisocyanat | 12,4 % | 43,4 g |

Analog Beispiel F9 werden nun 800 g des in Beispiel F9 beschriebenen Polyesters mit den in der Tabelle jeweils angeführten Mengen an Diisocyanat-Hydroxyethylacrylat-Addukt umgesetzt, so daß der resultierende NCO-Gehlalt des Produktes kleiner als 0,1 % ist.

Beispiel F17

Analog Beispiel F9 werden anstelle von 174 g Toluylendiisocyanat 367 g eines Isocyanatpräpolymeren (Desmodur PF, Handesprodukt der Fa. Bayer AG, Leverkusen) 116 g Hydroxyethylacrylat umgesetzt. Der NCO-Gehalt des Adduktes liegt bei 11,4 %. Anschließend werden analog Beispiel F9 800 g Polyester mit 62,0 g dieses Adduktes umgesetzt, so daß der resultierende NCO-Gehalt kleiner als 0,1 % beträgt.

Beispiel F18

In einen l l-Rundkolben werden unter Rühren und Stickstoffeinleitung bei 80°C 250 g Methylendiphenyl-4,4'-diisocyanat vorgelegt. Hierzu werden 244 g eines Oligoethers (Luphen U 5020, Handelsprodukt der Fa. BASF, Ludwigshafen) innerhalb 1 Stunde zugetropft. Anschließend werden diesem Produkt 58 g Hydroxyethylacrylat innerhalb 30 Minuten zugetropft, so daß der NCO-Gehalt dieses Produktes 3,8 % beträgt. Analog Beispiel F9 werden anschließend 800 g Polyester mit 142 g des Adduktes eingesetzt, so daß ein NCO-Gehalt von kleiner 0,1 % resultiert.

Beispiele F19 und F20 mit Polyestern gemäß $A_1$

Analog Beispiel F18 wird ein Addukt aus 250 g Methylendiphenyl-4,4'-diisocyanat, 58 g Hydroxyethylacrylat und 480 g eines Polyesters der Zusammensetzung: Adipinsäure/ethylenglykol/Neopentylglykol/Tetraethylenglykol = 100/56/14/30 mit einem Molekulargewicht von 960 hergestellt, das einen NCO-Gehalt von 2,7 % besitzt.

Analog Beispiel F9 werden nun 202 g bzw. 135 g dieses Adduktes mit jeweils 800 g des in Beispiel F9 beschriebenen Polyesters umgesetzt, so daß der resultierende NCO-Gehalt kleiner als 0,1 % liegt.

Beispiele F21 und F22

In einen l l-Rundkolben werden bei einer Temperatur von 80°C 800 g des in Beispiel F9 beschriebenen Polyesters mit 39 bzw. 65 g eines 1:1-Adduktes aus Toluylendiisocyanat und 2-Ethylhexanol (NCO = 13,8%)

umgesetzt. Anschließend werden diese Produkte analog Beispiel F9 mit 26,7 bzw. 20,0 g Isocyanatoethylmethacrylat funktionalisiert, so daß der resultierende NCO-Gehalt kleiner als 0,1 % liegt.

Beispiel F23

800 g des in Beispiel F9 beschriebenen Polyesters werden mit 8,2 g Trimellitsäureanhydrid bei 150° C und anschließend bei 80° C analog Beispiel F9 mit 20 g Isocyanatoethylmethacrylat umgesetzt, so daß der resultierende NCO-Gehalt kleiner 0,1 % beträgt.

Beispiele F24 und F25 mit Polyester gemäß $A_1$

Analog Beispiel F9 werden 800 g eines Polyesters der Zusammensetzung: Trimellitsäuremono-2-ethylhexylester/Ethylenglykol = 100/100 und einem Molekulargewicht von 2800 mit 26,6 g bzw. 35,4 g Isocyanatoethylmethacrylat umgesetzt.

Beispiel F26

Es wird verfahren gemäß Beispiel F24 mit der Änderung, daß zur Umsetzung 44,3 g Isocyanatoethylmethacrylat verwendet werden und nach der Umsetzung dem Produkt 80 g eines klebrigmachenden Harzes (Staybelite Ester 3, Fa. Hercules) zugesetzt werden.

Beispiel V3

Die in Beispiel F9 bis beschriebenen flüssigen Produkte werden mit einer Schichtdicke von 24 µm auf eine Polyethylentherephthalatfolie mittels einer Rakel aufgezogen und mit einer Elektronenstrahlendosis von 4 Mrad bestrahlt. Es werden damit overflächenklebrige Beschichtungen hergestellt, deren Kenndaten mit folgenden Methoden ermittelt wurden:

- Schälfestigkeit PSTC-1
- Scherstandfestigkeit 1 kg: PSTC-7
- Kugelroll-Tack: PSTC-6

Die Werte sind in folgender Tabellen zusammengefaßt.

| Beispiel | Schälfestigkeit (N/2,5 cm) | Scherstandfestigkeit (Std.) | Kugelroll-Tack (cm) |
|---|---|---|---|
| F9 | 1,2 | 0,25 | 5-6 |
| F10 | 2,0 | 6 | 2-3 |
| F11 | 1,5 | >24 | 3 |
| F12 | 3,0 | >24 | 12 |
| F13 | 4,5 | >24 | 3-4 |
| F14 | 3,5 | >24 | 7-8 |
| F15 | 4,5 | >24 | 3-4 |
| F16 | 5,0 | >24 | 6-7 |
| F17 | 3,0 | >24 | 7-8 |
| F18 | 4,5 | >24 | 4-5 |
| F19 | 3,5 | >24 | 5-6 |
| F20 | 3,0 | 8,5 | 1-2 |
| F21 | 2,5 | >24 | 3-4 |
| F22 | 3,5 | 8 | 1-2 |
| F23 | 2,4 | 0,5 | 1-2 |
| F24 | 11 (x) | >24 | >15 |
| F25 | 6 | >24 | >15 |
| F26 | 12 (x) | >24 | >15 |

Beispiel V4

Es wird analog verfahren wie in Beispiel F26 mit der Änderung, daß 80 g eines anderen klebrigmachenden Harzes (Kristalex FR 75, Fa. Hercules) zugesetzt werden.

Mit diesem Produkt werden nun 2 PETP-Folien mit einer Klebschicht von 24 um Dicke verklebt und mit einer Elektronenstrahlendosis von 4 Mrad vernetzt. Die Schälfestigkeit der Kaschierverklebung beträgt bei einer 180° C-Schälung 18 N/2,5 cm.

Beispiel 22

Herstellung des Polyesters zu Beispielen F24 und F25

In einem 2-1-Rundkolben werden 700 g des Trimellitsäure-2-ethylhexylesters gemäß Beispiel 14 mit 202 g Ethylenglykol unter Rühren und Stickstoffeinleitung aufgeheizt. Die Wasserabspaltung beginnt bei ca. 180° C, das Reaktionswasser wird über einer Vigreux-Kolonne und Destillationsbrücke bei einer Kopftemperatur von 100 bis 105° C abdestilliert.
Innerhalb von drei Stunden wird die Temperatur von 180° C auf 210° C gesteigert. Als Veresterungskatalysator werden nun 0,6 g Oktylenglykoltitanat zugesetzt und eine weitere Stunde bei 210° C gerührt. Es werden nun weitere 0,3 g Oktylglykoltitanat zugesetzt und nach Entfernen der Destillationseinrichtung ein Vakuum angelegt, das innerhalb von 30 Minuten auf 10 mbar abgesenkt wird. Es wird weiter kondensiert, bis die gewünschten Kenndaten von Hydroxylzahl = 40 mg KOH/g bei Säurezahl von kleiner 1 mg KOH/g erreicht werden.

## Patentansprüche

1. Haftklebstoffe mit dauerklebrigen Eigenschaften auf der Bais von Acrylgruppen oder Methacrylgruppen tragenden Polyestern, **dadurch gekennzeichnet,** daß
   a) Hydroxylgruppen enthaltende Basispolyester mit mittleren Molekulargewichten von 1.000 bis 10.000 mit Glasumwandlungstemperatur (Tg) unter 0 °C und bei 20 °C flüssigem Zusatand aus der Gruppe
      $a_1$) Hydroxylpolyester mit verzweigter aus Polyestereinheiten bestehender Kette mit Verzweigungen an dritten und höheren polyesterbildenden Funktionen und/oder
      $a_2$) Hydroxylpolyester mit über Estergruppen oder Etherbrücken von dritten oder höheren polyesterbildenden Funktionen gebundenen Alkylseitenketten mit 4 bis 36 C-Atomen in der Alkylgruppe,
   worin 10 bis 90 % der Hydroxylgruppen der Polyester nach a) mit Acrylatverbindungen oder Methacrylatverbindungen umgesetzt sind, wobei
   b) Acrylverbindungen oder Methacrylverbindungen aus der Gruppe
      $b_1$) Isocyanatoalkyl(meth-)acrylat und/oder
      $b_2$) Addukten aus Di- oder Triisocyanaten oder Polyisocyanaten oder Isocyanatopraepolymeren von Polyestern oder Polyethern mit niedrigem Molekulargewicht mit Hydroxylalkylacrylaten bzw.Hydroxyalkylmethacrylaten und/oder
      $b_3$) Methyl-acrylamidoglykolat-methylether und/oder
      $b_4$) Produkte der Umsetzung von 10 bis 90% der Hydroxylgruppen der Polyester mit einer Dicarbonsäure, Tricarbonsäure oder deren Anhydriden, welche an den Carborylgruppen mit Glycidylacrylat oder Glycidylmethacrylat umgesetzt sind und/oder
      $b_5$) Methacrylsäure oder Acrylsäure oder deren Derivate zur Umsetzung verwendet sind und
      c) die so hergestellten Methacrylgruppen oder Acrylgruppen tragenden Polyester in dünner Schicht auf flächige Materialien aufgetragen und mittels Elektronenstrahlen oder UV-Strahlen, ggf. nach Zusatz eines Photoinitiators, vernetzt oder gehärtet sind unter Entstehen von dauerklebrigen Oberflächen.

2. Haftklebstoffe nach Anspruch I, dadurch gekennzeichnet, daß die Vernetzung durch Bestrahlung von 2 bis 5 Mrad erfolgt.

3. Haftklebstoffe nach Anspruch 1, dadurch gekennzeichnet, daß 30 bis 70 % der Hydroxylgruppen der Polyester mit Acrylatgruppen oder Methacrylatgruppen umgesetzt sind.

4. Haftklebstoffe nach Anspruch 1, worin der micht mit (Meth)acrylatverbindungen umgesetzte Anteil der Hydroxylgruppen der Polyester ganz oder teilweise durch andere reaktiv vernetzbare oder nichtreaktive Gruppen ersetzt ist.

**5.** Haftklebstoffe nach den Ansprüchen 1 oder 3, worin der nicht mit (Meth)acrylatverbindungen umgesetzte Anteil der Hydroxylgruppen der Polyester als Hydroxylgruppen erhalten ist.

**6.** Haftkleber nach mindestens einem der Ansprüche 1 bis 5, dadurch gekennzeichnet, daß zusätzlich klebrigmachende Harze, Pigmente, Alterungsschutzmittel oder Füllstoffe enthalten sind.

**7.** Haftklebstoffe nach mindestens einem der Ansprüche 1 bis 6, dadurch gekennzeichnet, daß die Basispolyester eine Glasumwandlungstemperatur kleiner als - 20 °C besitzen.

**8.** Haftklebstoffe nach mindestens einem der Ansprüche 1 bis 6, dadurch gekennzeichnet, daß die Basispolyester nach $a_2$) geradkettige oder verzweigte Alkylseitenketten von vorzugsweise 4 bis 18 Kohlenstoffatomen tragen.

**9.** Haftklebstoffe nach einem der Ansprüche 1 bis 6, dadurch gekennzeichnet, daß in den Basispolyestern nach $a_2$) die Alkylseitenketten vorzugsweise verzweigt sind.

**10.** Haftklebstoffe nach einem der vorangehenden Ansprüche dadurch gekennzeichnet, daß in den Basispolyestern vor der Umsetzung mit Acrylatverbindungen die Hydroxylzahlen 10 bis 100, vorzugsweise 20 bis 60 mg KOH/g betragen.

**11.** Verfahren zur Herstellung von Haftklebstoffen aus strahlenvernetzbaren Makromeren auf der Basis von Acrylatgruppen oder Methacrylatgruppen tragenden Polyestern nach Anspruch 1 oder einem der Ansprüche 2 bis 10, dadurch gekennzeichnet, daß in erster Stufe ein Hydroxylgruppen enthaltender Basispolyester mit mittlerem Molekulargewicht von 1.000 bis 10.000 mit einer Glasumwandlungstemperatur (Tg) unter 0 °C und bei 20 °C flüssigem Zustand durch

$a_1$) Herstellung eines Hydroxylpolyesters mit verzweigteraus Polyestereinheiten bestehender Kette mit Verzweigungen an dritten und höheren polyesterbildenden Funktionen durch Kondensation von Diolen und Dicarbonsäuren bzw. deren polyesterbildenden Derivaten oder Anhydriden und mindestens 1 Mol-%, bezogen auf die Summe von Diolen und Dicarbonsäuren, einer trifunktionellen, polyesterbildenden Verbindung aus der Gruppe Triole, Tricarbonsäuren oder deren Derivaten oder Anhydriden oder Hydroxycarbonsäuren bei Temperaturen von 140 bis 230° C in an sich bekannter Weise mit einem molaren Überschuß von Diolen plus Triolen gegenüber den Di- plus Tricarbonsäuren und Entfernung des überschüssigen Diols bei der Polykondensation, bis die OH-Zahl von 10 bis 100 und eine Säurezahl unter 1 erreicht ist,

oder

$a_2$) Herstellung eines Hydroxylpolyesters mit über Estergruppen oder Etherbrücken von dritten oder höheren polyesterbildenden Funktionen gebundenen Alkylseitenketten mit 4 bis 36 C-Atomen in der Alkylgruppe durch Kondensation von Diolen und Dicarbonsäuren bzw. der polyesterbildenden Derivate oder Anhydride und Tricarbonsäuremonoalkylestern, Trimethylolpropanmonocarbonsäureestern und/oder Glycidylestern von gesättigten Monocarbonsäuren mit 4 bis 36 C-Atomen im Alkylrest bzw. der Monocarbonsäuren bei Temperaturen von 140 bis 230° C mit einem molaren Überschuß von Diolen plus ggf. Glycidylestern gegenüber Dicarbonsäure bzw. deren Derivaten bzw. Anhydriden plus Tricarbonsäuremonoestern und Entfernung des überschüssigen Diols bei der Polykondensation, bis die OH-Zahl von 10 bis 100 und eine Säurezahl unter 1 erreicht ist

und in zweiter Stufe Umsetzung von 10 bis 90 % der Hydroxylgruppen der Polyester mit Acrylverbindungen oder Methacrylverbindungen aus der Gruppe

$b_1$) Isocyanatoalkyl(meth-)acrylat und/oder

$b_2$) Addukten aus diisocyanaten oder Polyisocyanaten oder Isocyanatopraepolymeren von Polyestern oder Polyethern mit niedrigem Molekulargewicht mit Hydroxylalkylacrylaten bzw. Hydroxyalkylmethacrylaten und/oder $b_3$) Methyl-acrylamidoglykolat-methylether und/oder

$b_4$) nach Umsetzung von 10 bis 90 % der Hydroxylgruppen der Polyester mit Dicarbonsäure, Tricarbonsäure oder deren Anhydriden, die so gebildeten Carboxylgruppen mit Glycidylacrylat oder Glycidylmethacrylat umgesetzt sind

$b_5$) und/oder Methacrylsäure oder Acrylsäure

durch Umsetzung mit 1,0 bis 1,1 Mol eines der Stoffe $a_1$ bis $a_2$ je Mol der umzusetzenden OH-Gruppen bei 60 bis 150° C und Drucken von 300 mbar bis Normaldruck unter Ausschluß von Feuchtigkeit, worauf

c) der Haftkleber in dünner Schicht aufgetragen und mit Elektronenstrahlen oder UV-Strahlen

vernetzt wird.

## Claims

1. Adhesives with lasting adhesive properties and based on polyesters carrying acrylic groups or methacrylic groups, characterised in that
   a) hydroxyl group-containing basic polyesters with average molecular weights of 1,000 to 10,000 having glass transition temperature (Tg) below 0 ° C and liquid state at 20 ° C,from the group
      $a_1$) hydroxyl polyesters with branched chain consisting of polyester units and with branchings on the third and higher polyester-forming functions and/or
      $a_2$) hydroxyl polyesters with alkyl side chains with 4 to 36 C-atoms in the alkyl group connected via ester groups or ether bridges from third or higher polyester-forming functions,
   wherein 10 to 90% of the hydroxyl groups of the polyester according to a) are reacted with acrylate compounds or methacrylate compounds, with there being used in the reaction
   b) acrylic compounds or methacrylic compounds from the group
      $b_1$) isocyanatoalkyl(meth-)acrylate and/or
      $b_2$) adducts from di- or triisocyanates or polyisocyanates or isocyanato prepolymers of polyesters or polyethers of low molecular weight with the hydroxyalkylacrylates or hydroxylalkyl-methacrylates and/or
      $b_3$) methyl-acrylamidoglycolate-methylether and/or
      $b_4$) the products from reaction of 10 to 90% of the hydroxyl groups of the polyester with a dicarboxylic acid, tricarboxylic acid or anhydrides thereof which are reacted at carboxyl groups with glycidyl acrylate or glycidyl methacrylate and/or
      $b_5$) methacrylic acid or acrylic acid or derivatives thereof which are used for the reaction and
   c) the polyesters carrying methacrylic groups or acrylic groups thus produced are applied to flat materials and cross-linked or hardened by means of electron beams or UV beams possibly after addition of a photo initiator, giving rise to lasting adhesive surfaces.

2. Adhesives according to Claim 1, characterised in that the cross-liking takes place by radiation of 2 to 5 Mrad.

3. Adhesivess according to Claim 1, characterised in that 30 to 70% of the hydroxyl groups of the polyester are reacted with acrylate groups or methacrylate groups.

4. Adhesives according to Claim 1, wherein the quantity of the hydroxyl groups of the polyester not reacted with (meth)acrylate compounds is replaced completely or partially by other reactive cross-linkable or non-reactive groups.

5. Adhesives according to Claims 1 or 3, wherein the quantity of the hydroxyl groups of the polyester not reacted with (meth)acrylate compounds is obtained as hydroxyl groups.

6. Adhesives according to one of Claims 1 to 5, characterised in that resins acting as adhesives, pigments, aging protecting means or fillers are additional contained.

7. Adhesives according to at least one of Claims 1 to 6, characterised in that the basic polyesters possess a glass transition temperature less than -20 ° C.

8. Adhesives according to at least one of Claims 1 to 6, characterised in that the basic polyesters according to $a_2$) carry straight chained or branched alkyl side chains of preferably 4 to 18 carbon atoms.

9. Adhesives according to one of Claims 1 to 6, characterised in that, in the basic polyesters according to $a_2$), the alkyl side chains are preferably branched.

10. Adhesives according to one of the foregoing claims, characterised in that, in the basic polyesters before the reaction with acrylate compounds, the hydroxyl numbers amount to 10 to 100, preferably 20 to 60 KOH/g.

**11.** Process for the production of adhesives from irradiation cross-linkable macromers based on polyesters carrying acrylate groups or methacrylate groups according to Claim 1 or one of Claims 2 to 10, characterised in that in a first step the hydroxyl group-containing basic polyester with average molecular weight of 1000 to 10,000 with a glass transition temperature of (Tg) below 0 ° C and liquid state at 20 ° C is obtained by

$a_1$) production of a hydroxyl polyester with branched chain consisting of polyester units with branchings at the third and higher polyester forming function of units by condensation of diols and dicarboxylic acids or polyester- forming derivatives or anhydrides thereof and at least one mol-% related to the sum of diols and dicarboxylic acids of a trifunctional poly- ester-forming compound from the group triols, tricarboxylic acids or derivatives or anhydrides or hydroxycarboxylic acids thereof at temperatures of 140-230 ° C in manner known per se with a molar excess of diols plus triols with respect to the di- or tricarboxylic acids and removal of the excess diol in the polycondensation up to the OH number of 10-100 and an acid number below 1, or
$a_2$) production of a hydroxyl polyester with alkyl side chains connected by ester groups or ether bridges from third or higher polyester-forming functional groups and having 4 to 36 C-atoms in the alkyl group, by condensation of diols and dicarboxylic acids or of polyester-forming derivatives or anhydrides and tricarboxylic acid monoalkyl esters, trimethylol propane monocarboxylic acid esters and/or glycidyl esters of saturated monocarboxylic acids with 4 to 36 C-atoms in the alkyl residue or in the mono-carboxylic acids at temperatures of 140 to 230 ° C with a molar excess of diols and in addition, possibly glycidyl esters with respect to dicarboxylic acid or derivatives or anhydrides thereof and in addition, tricarboxylic acid monoesters, and removal of the excess diol in the polycondensation up to the OH number of 10 to 100 and an acid number below 1,
and in a second step reaction of 10 to 90% of the hydroxyl groups of the polyester with acrylic compounds or methacrylic compounds from the group
$b_1$) isocyanatoalkyl(meth-)acrylate and/or
$b_2$) adducts from di- or triisocyanates or polyisocyanates or isocyanato prepolymers of polyesters or polyethers of low molecular weight with the hydroxyalkylacrylates or hydroxylalkylmethacrylates and/or
$b_3$) methyl-acrylamidoglycolate-methylether and/or
$b_4$) the products from reaction of 10 to 90% of the hydroxyl groups of the polyester with a dicarboxylic acid, tricarboxylic acid or anhydrides thereof are reacted at carboxyl groups with glycidylacrylate or glycidylmethacrylate and/or
$b_5$) methacrylic acid or acrylic acid or derivatives thereof are used for the reaction and
by reaction with 1.0 to 1.1 mol of one of the substances $a_1$ to $a_2$ per mol of the OH groups to be reacted at 60 to 150 ° C and pressures of 300 mbar up to normal pressure with exclusion of moisture, whereupon
c) the adhesive is applied in thin layers and is cross-linked with electron beams or UV beams.

## Revendications

**1.** Colles de contact, ayant des propriétés d'adhésivité permanente, à base de polyesters portant des groupes acryles ou méthacryles, caractérisées en ce que :
a) elles comportent des polyesters de base, contenant des groupes hydroxyles, ayant des poids moléculaires moyens de 1000 à 10 000 et une température de transition vitreuse (Tv) inférieure à 0 ° C et à l'état liquide à 20 ° C, dans le groupe ;
($a_1$) des hydroxypolyesters comportant une chaîne ramifiée consistant en motifs polyester, avec des ramifications sur les troisièmes fonctions et les fonctions suivantes, formatrices de polyesters, et/ou
($a_2$) des hydroxypolyesters comportant des chaînes latérales alkyles ayant 4 à 36 atomes de carbone dans le groupe alkyle, reliées par l'intermédiaire de groupes esters ou de ponts éthers des troisièmes fonctions ou des fonctions suivantes et formatrices de polyesters,
10 à 90 % des groupes hydroxyles des polyesters selon (a) ayant réagi avec des acrylates ou avec des méthacrylates, où
b) on utilise pour la réaction des composés acryliques ou méthacryliques choisis dans le groupe formé par
($b_1$) un (méth)acrylate d'isocyanato-alkyle, et/ou
($b_2$) des produits d'addition et di- ou tri-isocyanates ou de polyisocyanates ou d'isocyanatoprépolymères de polyesters ou de polyéthers à bas poids moléculaire avec des acrylates d'hydroxyalkyle ou des méthacrylates d'hydroxyalkyle, et/ou
($b_3$) un éther méthylique d'acrylamidoglycolate de méthyle, et/ou
($b_4$) des composés qui, après réaction de 10 à 90 % des groupes hydroxyles des polyesters avec un acide dicarboxylique, un acide tricarboxylique ou leurs anhydrides donnant des groupes carboxyles, ont réagi avec l'acrylate de glycidyle ou le méthacrylate de glycidyle, et/ou
($b_5$) l'acide méthacrylique ou l'acide acrylique ou leurs dérivés, et

c) les polyesters portant des groupes méthacrylates ou acryles, ainsi produits, sont appliqués en couche mince sur des matières plates et, éventuellement après l'addition d'un photoamorceur, sont réticulées ou durcies à l'aide de faisceaux électroniques ou de rayons UV avec formation de surfaces à adhésivité permanente.

**2.** Colles de contact selon la revendication 1, caractérisées en ce que la réticulation a lieu par irradiation de 2 à 5 Mrad.

**3.** Colles de contact selon la revendication 1, caractérisées en ce que 30 à 70 % des groupes hydroxyles des polyesters ont réagi avec des groupes acrylates ou méthacrylates.

**4.** Colles de contact selon la revendication 1, dans lesquelles la fraction des groupes hydroxyles des polyesters n'ayant pas réagi avec des (méth)acrylates est remplacée totalement ou partiellement par d'autres groupes réactifs réticulables ou non réactifs.

**5.** Colles de contact selon les revendications 1 ou 3, dans lesquelles la fraction des groupes hydroxyles des polyesters n'ayant pas réagi avec des (méth)acrylates est obtenue sous forme de groupes hydroxyles.

**6.** Colle de contact selon l'une au moins des revendications 1 à 5, caractérisée en ce qu'elle contient en outre des résines conférant de l'adhésivité, des pigments, des agents de protection contre le vieillissement ou des charges.

**7.** Colles de contact selon l'une au moins des revendications 1 à 6, caractérisées en ce que les polyesters de base ont une température de transition vitreuse inférieure à -20 °C.

**8.** Colles de contact selon l'une au moins des revendications 1 à 6, caractérisées en ce que les polyesters de base selon ($a_2$) portent des chaînes latérales alkyles, linéaires ou ramifiées, ayant de préférence 4 à 18 atomes de carbone.

**9.** Colles de contact selon l'une des revendications 1 à 6, caractérisées en ce que, dans les polyesters de base selon ($a_2$), les chaînes alkyles latérales sont de préférence ramifiées.

**10.** Colles de contact selon l'une des revendications précédentes, caractérisées en ce que, dans les polyesters de base, et avant la réaction avec les acrylates, les indices d'hydroxyle valent 10 à 100, avantageusement 20 à 60 mg de KOH/g.

**11.** Procédé de préparation de colles de contact, à partir de macromères réticulables sous l'effet de rayonnement, à base de polyesters portant des groupes acrylate ou méthacrylate selon la revendication 1 ou selon l'une des revendications 2 à 10, caractérisé en ce que, dans une première étape, on obtient un polyester de base contenant des groupes hydroxyles, ayant un poids moléculaire moyen de 1000 à 10 000 et une température de transition vitreuse (Tv) inférieure à 0 °C et qui est à l'état liquide à 20 °C, par

($a_1$) préparation d'un hydroxypolyester comportant une chaîne ramifiée consistant en motifs polyester, avec des ramifications sur les troisièmes fonctions, ou les fonctions suivantes, formatrices de polyesters, par condensation de diols ou d'acides dicarboxyliques ou de leurs dérivés ou anhydrides formateurs de polyesters et d'au moins 1 mole % par rapport à la somme des diols et des acides dicarboxyliques, d'un composé trifonctionnel, formateur de polyesters, du groupe des triols, des acides tricarboxyliques ou de leurs dérivés ou anhydrides ou des acides hydroxycarboxyliques, à des températures de 140 à 230 °C, de façon connue en soi, avec un excès molaire des diols plus des triols par rapport aux acides dicarboxyliques plus les acides tricarboxyliques, et élimination du

diol excédentaire lors de la polycondensation, jusqu'à atteindre un indice de OH de 10 à 100 et un indice d'acide inférieur à 1, ou

($a_2$) préparation d'un hydroxypolyester comportant des chaînes alkyles latérales ayant 4 à 36 atomes de carbone dans le groupe alkyle, reliées par l'intermédiaire de groupes esters ou de ponts éthers des troisièmes fonctions ou des fonctions suivantes formatrices de polyesters, par condensation de diols et d'acides dicarboxyliques ou de dérivés ou anhydrides formateurs de polyesters et d'esters monoalkyliques d'acides tricarboxyliques, d'esters monocarboxyliques du triméthylopropane et d'acides monocarboxyliques et/ou d'esters glycidyliques d'acides monocarboxyliques saturés ayant 4 à 36 atomes de carbone dans le reste alkyle ou d'acide monocarboxyliques à des températures de 140 à 230 °C avec un excès molaire de diols plus éventuellement des esters glydicyliques, par rapport à l'acide dicarboxylique ou à ses dérivés ou anhydrides plus des monoesters d'acide tricarboxylique ou à ses dérivés ou anhydrides plus des monoesters d'acide tricarboxylique et élimination de l'excès de diol lors de la polycondensatiron, jusqu'à obtention d'un indice de OH de 10 à 100 et d'un indice d'acide inférieur à 1,

et, dans une seconde étape, réaction de 10 à 90% des groupes hydroxyles des polyesters avec des composés acryliques ou méthacryliques du groupe formé par

($b_1$) un (méth)acrylate d'isocyanato-alkyle, et/ou

($b_2$) des produits d'addition de diisocyanates ou de polyisocyanates ou d'isocyanatoprépolymères de polyesters ou de polyesters à bas poids moléculaire avec des acrylates d'hydroxyalkyle ou des méthacrylates d'hydroxyalkyle, et/ou

($b_3$) un éther méthylique d'acrylaminoglycolate de méthyle, et/ou

($b_4$) après réaction de 10 à 90 % des groupes hydroxyles des polyesters avec un acide dicarboxylique, un acide tricarboxylique ou leurs anhydrides, on a fait reagir les groupes carboxyliques ainsi formés avec l'acrylate de glycidyle ou le méthacrylate de glycidyle, et/ou

($b_5$) l'acide méthacrylique ou l'acide acrylique, par réaction de 1,0 à 1,1 mole d'une des substances ($a_1$) à ($a_2$) par mole de groupes OH à faire réagir, à 60 jusqu'à 150 °C et sous des pressions de 300 mbar jusqu'à la pression normale, en opérant à l'abri de l'humidité, puis

(c) on applique la colle de contact en couche mince et on la réticule à l'aide de faisceaux d'électrons ou de rayons UV.